# EUROPEAN PATENT APPLICATION

(11) **EP 4 514 020 A1**
(43) Date of publication of application: **26.02.2025**
(21) Application number: 22938565.3
(22) Date of filing: 22.04.2022
(51) Int. Cl.: H04W 72/12, H04W 16/28

(54) **TERMINAL, WIRELESS COMMUNICATION METHOD, AND BASE STATION**

(71) Applicant: NTT DOCOMO, INC., Chiyoda-ku Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN)
(74) Representative: Hoffmann Eitle
(86) International application number: PCT/JP2022/018586
(87) International publication number: WO 2023/203766

(57) **Abstract**

A terminal according to one aspect of the present disclosure includes: a receiving section that receives multiple downlink control information (DCI) for indicating multiple transmission configuration indication (TCI) states; and a control section that determines, based on an index related to a transmission/reception point associated with a control resource set scheduling or triggering a signal to which a TCI state is to be applied, which TCI state among the multiple TCI states to apply to the signal, whereineach of the multiple TCI states is a TCI state to be applied to both a downlink (DL) signal and an uplink (UL) signal, or a TCI state to be applied to a DL signal and a TCI state to be applied to a UL signal. According to one aspect of the present disclosure, it is possible to appropriately perform TCI state indication.

## Description

### Technical Field

The present disclosure relates to a terminal, a radio communication method, and a base station in next-generation mobile communication systems.

### Background Art

In a Universal Mobile Telecommunications System (UMTS) network, the specifications of Long Term Evolution (LTE) have been drafted for the purpose of further increasing high speed data rates, providing lower latency and so on (see Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

For future radio communication systems (for example, NR), it is studied that a user terminal (terminal, User Equipment (UE)) controls transmission/reception processing, based on information related to quasi-co-location (QCL) (QCL assumption/Transmission Configuration Indication (TCI) state/spatial relation).

It is studied to apply a configured/activated/indicated TCI state to multiple types of signals (channels/RSs). However, a method of indicating a TCI state is not clear in some cases. Unless a method of indicating a TCI state is clear, this may cause degradation in communication quality, throughput reduction, and the like.

Thus, an object of the present disclosure is to provide a terminal, a radio communication method, and a base station that are for appropriately performing TCI state indication.

### Solution to Problem

A terminal according to one aspect of the present disclosure includes: a receiving section that receives multiple downlink control information (DCI) for indicating multiple transmission configuration indication (TCI) states; and a control section that determines, based on an index related to a transmission/reception point associated with a control resource set scheduling or triggering a signal to which a TCI state is to be applied, which TCI state among the multiple TCI states to apply to the signal,wherein each of the multiple TCI states is a TCI state to be applied to both a downlink (DL) signal and an uplink (UL) signal, or a TCI state to be applied to a DL signal and a TCI state to be applied to a UL signal.

### Advantageous Effects of Invention

According to one aspect of the present disclosure, it is possible to appropriately perform TCI state indication.

### Brief Description of Drawings

[FIG. 1] FIG. 1A and FIG. 1B are diagrams to show examples of communication between a moving object and transmission points (for example, RRHs).
[FIG. 2] FIG. 2A to FIG. 2C are diagrams to show examples of schemes 0 to 2 related to an SFN.
[FIG. 3] FIG. 3A and FIG. 3B are diagrams to show an example of scheme 1.
[FIG. 4] FIG. 4A to FIG. 4C are diagrams to show an example of a Doppler pre-compensation scheme.
[FIG. 5] FIG. 5 is a diagram to show an example of simultaneous beam update over multiple CCs.
[FIG. 6] FIG. 6A and FIG. 6B are diagrams to show examples of a common beam.
[FIG. 7] FIG. 7 is a diagram to show an example of a MAC CE defined in Rel. 16.
[FIG. 8] FIG. 8 is a diagram to show another example of the MAC CE defined in Rel. 16.
[FIG. 9] FIG. 9 is a diagram to show another example of the MAC CE defined in Rel. 16.
[FIG. 10] FIG. 10A and FIG. 10B are diagrams to show respective examples of single-DCI based multi-TRP transmission and multi-DCI based multi-TRP transmission.
[FIG. 11] FIG. 11A and FIG. 11B are diagrams to show examples of a TCI field(s) in DCI.
[FIG. 12] FIG. 12A and FIG. 12B are diagrams to show an example of configuration/indication of joint TCI states in single-DCI based multi-TRP.
[FIG. 13] FIG. 13A and FIG. 13B are diagrams to show an example of configuration/indication of separate TCI states in single-DCI based multi-TRP.
[FIG. 14] FIG. 14A and FIG. 14B are diagrams to show an example of configuration/indication of a joint TCI state corresponding to a CORESET pool index of a first value in multi-DCI based multi-TRP.
[FIG. 15] FIG. 15A and FIG. 15B are diagrams to show an example of configuration/indication of a joint TCI state corresponding to a CORESET pool index of a second value in multi-DCI based multi-TRP.
[FIG. 16] FIG. 16 is a diagram to show an example of configuration/indication of TCI states according to a first embodiment.
[FIG. 17] FIG. 17 is a diagram to show an example of selection/application of TCI states according to embodiment 2-1.
[FIG. 18] FIG. 18 is a diagram to show an example of selection/application of TCI states according to embodiment 2-2.
[FIG. 19] FIG. 19 is a diagram to show another example of the selection/application of TCI states according to embodiment 2-2.
[FIG. 20] FIG. 20A to FIG. 20C are diagrams to show examples of a DCI field according to variations of embodiment 2-1/2-2.
[FIG. 21] FIG. 21 is a diagram to show an example of selection/application of TCI states according to the variations of embodiment 2-1/2-2.
[FIG. 22] FIG. 22A and FIG. 22B are diagrams to show an example of selection/application of TCI states according to embodiment 2-3.
[FIG. 23] FIG. 23 is a diagram to show another example of the selection/application of TCI states according to embodiment 2-3.
[FIG. 24] FIG. 24 is a diagram to show an example of a TCI state list according to embodiment 3-1.
[FIG. 25] FIG. 25 is a diagram to show an example of TCI state lists according to embodiment 3-2.
[FIG. 26] FIG. 26 is a diagram to show an example of a configuration of a MAC CE according to option 1.
[FIG. 27] FIG. 27 is a diagram to show an example of a configuration of a MAC CE according to option 2-1.
[FIG. 28] FIG. 28 is a diagram to show an example of a configuration of a MAC CE according to option 2-3.
[FIG. 29] FIG. 29 is a diagram to show an example of a configuration of a MAC CE according to option 2-4/2-5.
[FIG. 30] FIG. 30 is a diagram to show an example of a configuration of a MAC CE according to option 2-6.
[FIG. 31] FIG. 31A and FIG. 31B are diagrams to show an example of a configuration of a MAC CE according to option 2-7.
[FIG. 32] FIG. 32 is a diagram to show an example of a configuration of a MAC CE according to option 2-8.
[FIG. 33] FIG. 33 is a diagram to show another example of the configuration of the MAC CE according to option 2-8.
[FIG. 34] FIG. 34 is a diagram to show an example of a schematic structure of a radio communication system according to one embodiment.
[FIG. 35] FIG. 35 is a diagram to show an example of a structure of a base station according to one embodiment.
[FIG. 36] FIG. 36 is a diagram to show an example of a structure of a user terminal according to one embodiment.
[FIG. 37] FIG. 37 is a diagram to show an example of a hardware structure of the base station and the user terminal according to one embodiment.
[FIG. 38] FIG. 38 is a diagram to show an example of a vehicle according to one embodiment.

### Description of Embodiments

### (TCI, Spatial Relation, and QCL)

For NR, control of reception processing (for example, at least one of reception, de-mapping, demodulation, and decoding) and transmission processing (for example, at least one of transmission, mapping, precoding, modulation, and coding) of at least one of a signal and a channel (expressed as a signal/channel) in a UE, based on a transmission configuration indication state (TCI state) has been under study.

The TCI state may be a state applied to a downlink signal/channel. A state that corresponds to a TCI state applied to an uplink signal/channel may be expressed as spatial relation.

The TCI state is information related to quasi-co-location (QCL) of the signal/channel, and may be referred to as a spatial reception parameter, spatial relation information (SRI), or the like. The TCI state may be configured for the UE for each channel or for each signal.

QCL is an indicator indicating statistical properties of the signal/channel. For example, when a certain signal/channel and another signal/channel are in a relationship of QCL, it may mean that it is assumable that at least one of a Doppler shift, a Doppler spread, an average delay, a delay spread, and a spatial parameter (for example, a spatial reception parameter (spatial Rx parameter)) is the same (the relationship of QCL is satisfied in at least one of these) between multiple different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, multiple types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): spatial reception parameter

A case where the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

The physical layer signaling may be, for example, downlink control information (DCI).

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

For a PDCCH and a PDSCH, a QCL type A RS may always be configured, while a QCL type D RS may be configured additionally. Since it is difficult to estimate Doppler shift, latency, and the like, based on one-shot reception of a DMRS, the QCL type A RS is used for improvement of channel estimation accuracy. The QCL type D RS is used for receive beam determination at the time of DMRS reception.

For example, TRSs 1-1, 1-2, 1-3, and 1-4 are transmitted, and TRS 1-1 is notified as a QCL type C/D RS according to the TCI state of a PDSCH. By the TCI state being notified, the UE can use information obtained from results of past periodic reception/measurement of TRS 1-1, for reception/channel estimation of a DMRS for PDSCH. In this case, the QCL source of the PDSCH is TRS 1-1, and the QCL target is the DMRS for PDSCH.

### (Default TCI State/Default Spatial Relation/Default PL-RS)

In Rel. 16, a PDSCH may be scheduled by DCI having a TCI field. A TCI state for a PDSCH is indicated by a TCI field. A TCI field in DCI format 1-1 has three bits, and a TCI field in DCI format 1-2 has three bits at maximum.

In the RRC connected mode, if a TCI information element in first DCI (higher layer parameter tci-PresentInDCI) is set at "enabled" for a CORESET for scheduling a PDSCH, a UE assumes that a TCI field is present in DCI format 1_1 of a PDCCH transmitted in the CORESET.

If a TCI information element in second DCI (higher layer parameter tci-PresentInDCI-1-2) for a CORESET for scheduling a PDSCH is configured for a UE, the UE assumes that a TCI field having a DCI field size indicated by the TCI information element in the second DCI is present in DCI format 1_2 of the PDSCH to be transmitted in the CORESET.

In Rel. 16, a PDSCH may be scheduled by DCI having no TCI field. The DCI format of the DCI may be DCI format 1_0 or DCI format 1_1/1_2 in a case where a TCI information element in DCI (higher layer parameter tci-PresentInDCI or tci-PresentInDCI-1-2) is not configured (enabled). When a PDSCH is scheduled by DCI having no TCI field and if the time offset between reception of DL DCI (DCI for scheduling the PDSCH (scheduling DCI)) and the corresponding PDSCH (PDSCH scheduled by the DCI) is equal to or larger than a threshold (timeDurationForQCL), a UE assumes that the TCI state or the QCL assumption for the PDSCH is the same as the TCI state or the QCL assumption (default TCI state) of a CORESET (for example, scheduling DCI).

In the RRC connected mode, when the time offset between reception of DL DCI (DCI for scheduling a PDSCH) and the corresponding PDSCH (PDSCH scheduled by DCI) is smaller than the threshold (timeDurationForQCL) (application condition, first condition) in both a case where a TCI information element in DCI (higher layer parameter tci-PresentInDCI or tci-PresentInDCI-1-2) is set at "enabled" and a case where a TCI information element in DCI is not configured, the TCI state of the PDSCH (default TCI state) may be the TCI state having the lowest CORESET ID in the latest slot in an active DL BWP in the CC (of a specific UL signal) if it is a case of non-cross carrier scheduling. Otherwise, the TCI state of the PDSCH (default TCI state) may be the TCI state having the lowest TCI state ID of the PDSCH in the active DL BWP in the CC scheduled.

In Rel. 15, individual MAC CEs, specifically, a MAC CE for activation/deactivation of a PUCCH spatial relation and a MAC CE for activation/deactivation of an SRS spatial relation, are needed. A PUSCH spatial relation conforms to an SRS spatial relation.

In Rel. 16, at least one of a MAC CE for activation/deactivation of a PUCCH spatial relation and a MAC CE for activation/deactivation of an SRS spatial relation need not be used.

If neither a spatial relation nor a PL-RS for a PUCCH is configured in FR2 (application condition, second condition), default assumption of a spatial relation and default assumption of a PL-RS (default spatial relation and default PL-RS) are applied to the PUCCH. If neither a spatial relation nor a PL-RS for an SRS (SRS resource for an SRS or SRS resource corresponding to an SRI in DCI format 0_1 for scheduling a PUSCH) is configured in FR2 (application condition, second condition), default assumption of a spatial relation and default assumption of a PL-RS (default spatial relation and default PL-RS) are applied to the PUSCH scheduled by DCI format 0_1 and the SRS.

If a CORESET is configured in the active DL BWP on the CC (application condition), the default spatial relation and the default PL-RS may correspond to the TCI state or the QCL assumption of the CORESET having the lowest CORESET ID in the active DL BWP. If a CORESET is not configured in the active DL BWP on the CC, the default spatial relation and the default PL-RS may correspond to the active TCI state having the lowest ID of a PDSCH in the active DL BWP.

In Rel. 15, the spatial relation of a PUSCH scheduled by DCI format 0_0 conforms to the spatial relation of the PUCCH resource having the lowest PUCCH resource ID among the active spatial relations of the PUCCH on the same CC. A network need update PUCCH spatial relations on all the SCells even when no PUCCH is transmitted on any SCell.

In Rel. 16, no PUCCH configuration is needed for a PUSCH scheduled by DCI format 0_0. When there is no active PUCCH spatial relation or there is no PUCCH resource on an active UL BWP in the CC for a PUSCH scheduled by DCI format 0_0 (application condition, second condition), a default spatial relation and a default PL-RS are applied to the PUSCH.

The application condition for a default spatial relation/default PL-RS for SRS may include that an enable default beam pathloss for SRS information element (higher layer parameter enableDefaultBeamPlForSRS) is set at enabled. The application condition for a default spatial relation/default PL-RS for PUCCH may include that an enable default beam pathloss for PUCCH information element (higher layer parameter enableDefaultBeamPlForPUCCH) is set at enabled. The application condition for a default spatial relation/default PL-RS for PUSCH scheduled by DCI format 0_0 may include that an enable default beam pathloss for PUSCH scheduled by DCI format 0_0 information element (higher layer parameter enableDefaultBeamPlForPUSCH0_0) is set at enabled.

In Rel. 16, when an RRC parameter (parameter for enabling default beam PL for PUCCH (enableDefaultBeamPL-ForPUCCH), a parameter for enabling default beam PL for PUSCH (enableDefaultBeamPL-ForPUSCH0_0), or a parameter for enabling default beam PL for SRS (enableDefaultBeamPL-ForSRS)) is configured and no spatial relation or PL-RS is configured, for a UE, the UE applies a default spatial relation/PL-RS.

The threshold may be referred to as a time duration for QCL, "timeDurationForQCL," "Threshold," "Threshold for offset between a DCI indicating a TCI state and a PDSCH scheduled by the DCI," "Threshold-Sched-Offset," "beamSwitchTiming," a schedule offset threshold, a scheduling offset threshold, and the like. The threshold may be reported by a UE as a UE capability (per subcarrier spacing).

In a case where the offset (scheduling offset) between reception of DL DCI and a corresponding PDSCH is smaller than a threshold timeDurationForQCL, where at least one TCI state configured for a serving cell of the scheduled PDSCH includes "QCL type D," where a UE is configured with an enable two-default TCI information element (enableTwoDefaultTCIStates-r16), and where at least one TCI codepoint (codepoint of a TCI field in the DL DCI) indicates two TCI states, the UE assumes that a DMRS port of the PDSCH or PDSCH transmission occasion in the serving cell is QCLed (quasi co-located) with an RS related to a QCL parameter associated with two TCI states corresponding to the lowest codepoint of TCI codepoints including two different TCI states (two-default QCL assumption determination rule). The enable two-default TCI information element indicates that an Rel-16 operation for two default TCI states for PDSCH when at least one TCI codepoint is mapped to two TCI states is enabled.

As a default TCI state of a PDSCH in Rel. 15/16, specifications of a default TCI state for single TRP, a default TCI state for multi-DCI based multi-TRP, and a default TCI state for single-DCI based multi-TRP have been drafted.

As a default TCI state for of an aperiodic CSI-RS (A-CSI-RS) in Rel. 15/16, specifications of a default TCI state for single TRP, a default TCI state for multi-DCI based multi-TRP, and a default TCI state for single-DCI based multi-TRP have been drafted.

In Rel. 15/16, specifications of a default spatial relation and a default PL-RS for each of a PUSCH/PUCCH/SRS have been drafted.

### (Multi-TRP)

For NR, it is studied that one or multiple transmission/reception points (TRPs) (multi-TRP (multi TRP (MTRP))) perform DL transmission to a UE by using one or multiple panels (multi-panel). It is also studied that the UE performs UL transmission to the one or plurality of TRPs by using one or multiple panels.

Note that the multiple TRPs may correspond to the same cell identifier (ID) or may correspond to different cell IDs. The cell ID may be a physical cell ID or a virtual cell ID.

The multi-TRP (for example, TRPs #1 and #2) may be connected via ideal/non-ideal backhaul to exchange information, data, and the like. Each TRP of the multi-TRP may transmit a different codeword (Code Word (CW)) and a different layer. As one mode of multi-TRP transmission, non-coherent joint transmission (NCJT) may be employed.

In NCJT, for example, TRP #1 performs modulation mapping on a first codeword, performs layer mapping, and transmits a first PDSCH in layers of a first number (for example, two layers) by using first precoding. TRP #2 performs modulation mapping on a second codeword, performs layer mapping, and transmits a second PDSCH in layers of a second number (for example, two layers) by using second precoding.

Note that multiple PDSCHs (multi-PDSCH) transmitted by NCJT may be defined to partially or entirely overlap in terms of at least one of the time and frequency domains. In other words, the first PDSCH from a first TRP and the second PDSCH from a second TRP may overlap in terms of at least one of the time and frequency resources.

The first PDSCH and the second PDSCH may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

Multiple PDSCHs (which may be referred to as multi-PDSCH (multiple PDSCHs)) from the multi-TRP may be scheduled by using one DCI (single DCI, single PDCCH) (single master mode, single-DCI based multi-TRP). The multiple PDSCHs from the multi-TRP may be separately scheduled by using multiple DCI (multi-DCI, multi-PDCCH (multiple PDCCHs)) (multi-master mode, multi-DCI based multi-TRP).

For URLLC for multi-TRP, it is studied to support PDSCH (transport block (TB) or codeword (CW)) repetition over multi-TRP. It is studied to support a scheme of repetition over multi-TRP in the frequency domain, the layer (space) domain, or the time domain (URLLC schemes, for example, schemes 1, 2a, 2b, 3, and 4). In scheme 1, multi-PDSCH from multi-TRP are space division multiplexed (SDMed). In schemes 2a and 2b, PDSCHs from multi-TRP are frequency division multiplexed (FDMed). In scheme 2a, a redundancy version (RV) is the same for the multi-TRP. In scheme 2b, an RV may be the same or may be different for the multi-TRP. In schemes 3 and 4, multi-PDSCH from multi-TRP are time division multiplexed (TDMed). In scheme 3, multi-PDSCH from multi-TRP are transmitted in one slot. In scheme 4, multi-PDSCH from multi-TRP are transmitted in different slots.

According to such a multi-TRP scenario, more flexible transmission control using a channel with high quality is possible.

To support intra-cell (with the same cell ID) and inter-cell (with different cell IDs) multi-TRP transmission based on multiple PDCCHs, one control resource set (CORESET) in PDCCH configuration information (PDCCH-Config) may correspond to one TRP in RRC configuration information for linking multiple pairs of a PDCCH and a PDSCH with multiple TRPs.

When at least one of conditions 1 and 2 below is satisfied, the UE may determine that it is multi-DCI based multi-TRP. In this case, a TRP may be interpreted as a CORESET pool index.

### {Condition 1}

One CORESET pool index is configured.

### {Condition 2}

Two different values (for example 0 and 1) of a CORESET pool index are configured.

When the following condition is satisfied, the UE may determine that it is single-DCI based multi-TRP. In this case, two TRPs may be interpreted as two TCI states indicated by a MAC CE/DCI.

### {Condition}

To indicate one or two TCI states for one codepoint of a TCI field in DCI, an "enhanced TCI states activation/deactivation for UE-specific PDSCH MAC CE" is used.

DCI for common beam indication may be a UE-specific DCI format (for example, DL DCI format (for example, 1_1, 1_2)), may be a UL DCI format (for example, 0_1, 0_2), or may be a UE-group common DCI format.

### (Multi-TRP PDCCH)

For reliability of a multi-TRP PDCCH based on non-single frequency network (SFN), studies 1 to 3 below are studied.
{Study 1} Coding/rate matching is based on one repetition, and the same coding bits are repeated in other repetitions.
{Study 2} Each repetition has the same number of control channel elements (CCEs) and the same coding bits and corresponds to the same DCI payload.
{Study 3} Two or more PDCCH candidates are explicitly linked to each other. A UE finds the link before decoding.

Choices 1-2, 1-3, 2, and 3 below are studied for PDCCH repetition.

### {Choice 1-2}

Two sets of PDCCH candidates (in a given search space (SS) set) are associated with two respective TCI states of a CORESET. Here, the same CORESET, the same SS set, and PDCCH repetitions in different monitoring occasions are used.

### {Choice 1-3}

Two sets of PDCCH candidates are associated with two respective SS sets. Both of the SS sets are associated with a CORESET, and each SS set is associated with only one TCI state of the CORESET. Here, the same CORESET and two SS sets are used.

### {Choice 2}

One SS set is associated with two different CORESETs.

### {Choice 3}

Two SS sets are associated with two respective CORESETs.

As described above, it is studied that two PDCCH candidates in two SS sets for PDCCH repetitions are supported and two SS sets are explicitly linked.

### (SFN PDCCH)

For a PDCCH/CORESET defined in Rel. 15, one TCI state without any CORESET pool index (CORESETPoolIndex) (which may be referred to as TRP information (TRP Info)) is configured for one CORESET.

For enhancement of a PDCCH/CORESET defined in Rel. 16, a CORESET pool index is configured for each CORESET in multi-DCI based multi-TRP.

In Rel. 17 or later versions, enhancements 1 and 2 below related to a PDCCH/CORESET are studied.

In a case where multiple antennas (small antennas, transmission/reception points) having the same cell ID form a single frequency network (SFN), up to two TCI states can be configured/activated for one CORESET by higher layer signaling (RRC signaling/MAC CE) (enhancement 1). The SFN contributes to improvement of at least one of management and reliability of an HST (high speed train).

In PDCCH repetition transmission (which may be simply referred to as "repetition"), two PDCCH candidates in two search space sets are linked, and each search space set is associated with a corresponding CORESET (enhancement 2). The two search space sets may be associated with the same or different CORESETs. For one CORESET, one TCI state (one at maximum) may be configured/activated by higher layer signaling (RRC signaling/MAC CE) .

If two search space sets are associated with different CORESETs having different TCI states, this may mean multi-TRP repetition transmission. If two search space sets are associated with the same CORESET (CORESETs having the same TCI state), this may mean single-TRP repetition transmission.

### (HST)

In LTE, arrangement in a tunnel for an HST (high speed train) is difficult. A large antenna performs transmission to the outside/inside of a tunnel. For example, such a large antenna has transmission power of approximately 1 to 5 W. For handover, it is important to perform transmission to the outside of a tunnel before a UE enters the tunnel. For example, a small antenna has transmission power of approximately 250 mW. Multiple small antennas (transmission/reception points) having the same cell ID and having a distance of 300 m form a single frequency network (SFN). All the small antennas in such an SFN transmit identical signals on the same PRB at the same time. It is assumed that a terminal performs transmission to/reception from one base station. In actual, multiple transmission/reception points transmit identical DL signals. At high-speed movement, transmission/reception points in several km units form one cell. Handover is performed at the time of moving over cells. In this way, it is possible to reduce handover frequency.

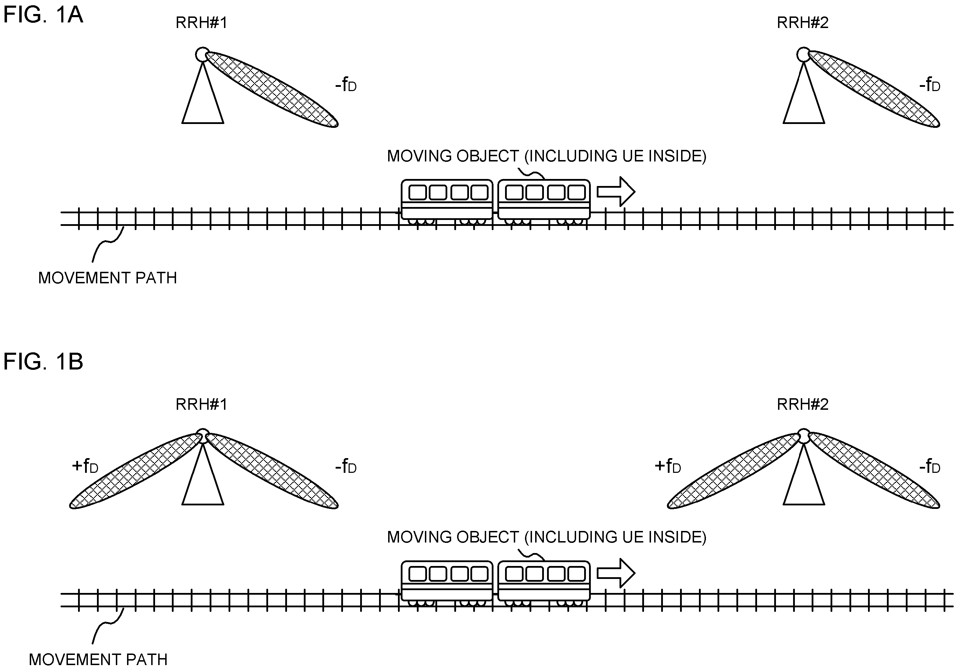

In NR, it is assumed that, to perform communication with a terminal (also referred to as a UE below) included in a moving object such as a train moving at high speed (HST (high speed train)), beams transmitted from transmission points (for example, RRHs) are used. An existing system (for example, Rel. 15) supports to transmit a uni-directional beam from each RRH to perform communication with a moving object (see FIG. 1A).

FIG. 1A shows a case where RRHs are installed along a movement path (or a movement direction, travel direction, traveling path) of the moving object and a beam is formed in the travel direction of the moving object from each RRH. The RRH forming a unidirectional beam may be referred to as a uni-directional RRH. In the example shown in FIG. 1A, the moving object receives a minus Doppler shift (-fD) from each RRH.

Note that, although a case where each beam is formed in the travel direction of the moving object is shown here, this is not restrictive. Each beam may be formed in the opposite direction to the travel direction or may be formed in any direction irrespective of the travel direction of the moving object.

In Rel. 16 or later versions, it is also assumed that multiple (for example, two or more) beams are transmitted from each RRH. For example, it is assumed that beams are formed in both a travel direction of a moving object and the opposite direction to the travel direction (see FIG. 1B).

FIG. 1B shows a case where RRHs are installed along a movement path of the moving object and beams are formed in both the travel direction of the moving object and the opposite direction to the travel direction from each RRH. The RRH forming multi-directional (for example, bi-directional) beams may be referred to as a bi-directional RRH.

In this HST, a UE performs communication similarly to a single TRP. In base station implementation, transmission can be performed from multiple TRPs (same cell ID).

In the example in FIG. 1B, when two RRHs (here, RRH #1 and RRH #2) use an SFN, signals are switched from a signal that has received a minus Doppler shift to a signal that has received a plus Doppler shift increasing a power, when the moving object is midway between the two RRHs. In this case, the maximum change width of Doppler shift requiring correction is a change from -fD to +fD, which is twice as much as that of a case with uni-directional RRHs.

Note that, in the present disclosure, a plus Doppler shift may be interpreted as information related to a plus Doppler shift, a plus (positive)-direction Doppler shift, and plus (positive)-direction Doppler information. A minus Doppler shift may be interpreted as information related to a minus Doppler shift, a minus (negative)-direction Doppler shift, and minus (negative)-direction Doppler information.

Here, as a scheme for HST, scheme 0 to scheme 2 below (HST scheme 0 to HST scheme 2) are compared.

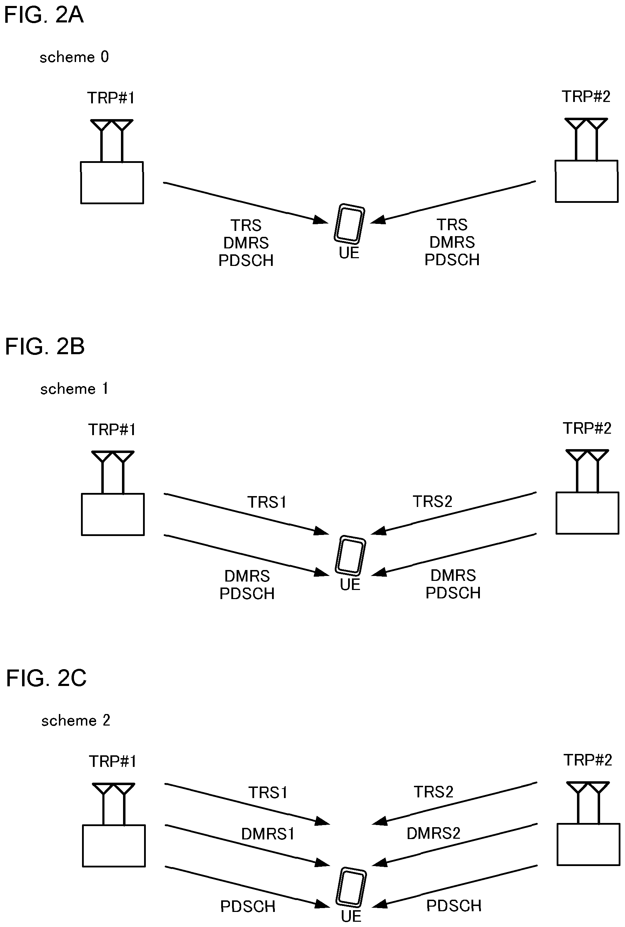

In scheme 0 in FIG. 2A, a tracking reference signal (TRS), a DMRS, and a PDSCH are transmitted commonly from two TRPs (RRHs) (by using the same time and the same frequency resources) (normal SFN, transparent SFN, HST-SFN).

In scheme 0, since a UE receives DL channels/signals on the equivalent of a single TRP, the number of TCI states of the PDSCHs is one.

Note that, in Rel. 16, an RRC parameter for differentiating transmission using a single TRP and transmission using an SFN is defined. When a UE reports corresponding UE capability information, the UE may differentiate reception of a DL channel/signal from a single TRP and reception of PDSCHs assuming an SFN, based on the RRC parameter. Meanwhile, the UE may perform transmission/reception using an SFN on the assumption of a single TRP.

In scheme 1 in FIG. 2B, each TRS is transmitted in a TRP-specific manner (by using a different time/frequency resource from each TRP). In this example, TRS1 is transmitted from TRP #1, and TRS2 is transmitted from TRP #2.

In scheme 1, since a UE receives a DL channel/signal from each TRP by using a TRS from the TRP, the number of TCI states of the PDSCHs is two.

In scheme 2 in FIG. 2C, each TRS and each DMRS are transmitted in a TRP-specific manner. In this example, TRS1 and DMRS1 are transmitted from TRP #1, and TRS2 and DMRS2 are transmitted from TRP #2. Schemes 1 and 2 can suppress an abrupt change in Doppler shift and estimate/compensate a Doppler shift appropriately, compared to scheme 0. Since scheme 2 uses a larger number of DMRSs than the number of DMRSs in scheme 1, the maximum throughput in scheme 2 is lower than that in scheme 1.

In scheme 0, the UE switches a single TRP and an SFN, based on higher layer signaling (RRC information element/MAC CE).

The UE may switch scheme 1/scheme 2/NW pre-compensation scheme, based on higher layer signaling (RRC information element/MAC CE).

In scheme 1, two respective TRS resources are configured for the travel direction of the HST and the opposite direction to the travel direction.

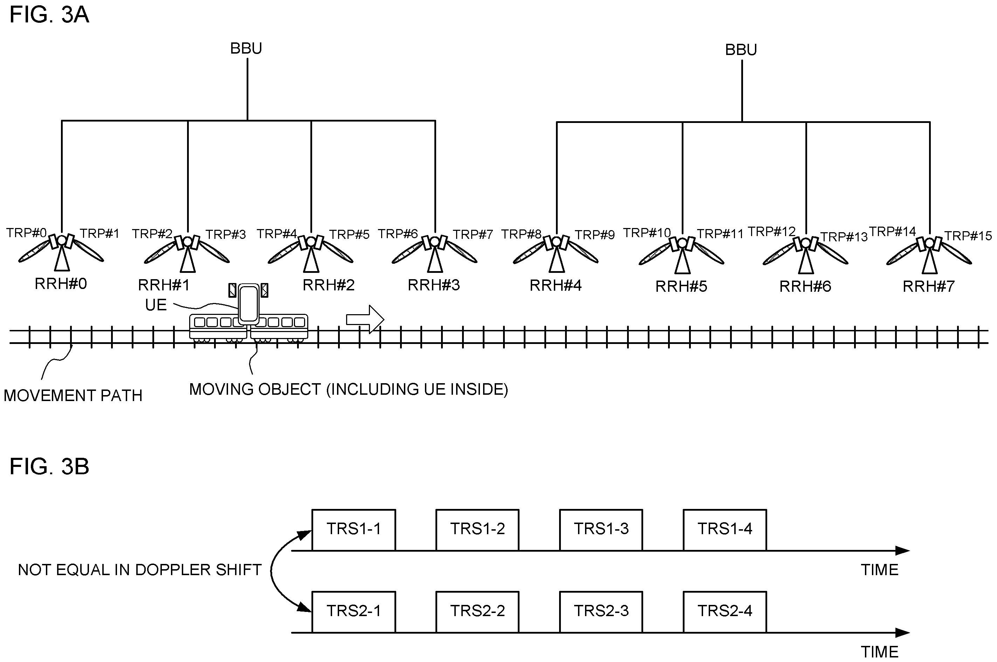

In the example in FIG. 3A, TRPs that transmit DL signals in the opposite direction of the HST (TRPs #0, #2, ...) transmit first TRSs (TRSs arriving from the front of the HST) in the same time and frequency resources (SFN). TRPs that transmit DL signals in the travel direction of the HST (TRPs #1, #3, ...) transmit second TRSs (TRSs arriving from the rear of the HST) in the same time and frequency resources (SFN). The first TRSs and the second TRSs may be transmitted/received by using different frequency resources.

In the example in FIG. 3B, TRSs 1-1 to 1-4 are transmitted as the first TRSs, and TRSs 2-1 to 2-4 are transmitted as the second TRSs.

In consideration of beam management, the first TRSs are transmitted by using 64 beams and 64 time resources, and the second TRSs are transmitted by using 64 beams and 64 time resources. The beams of the first TRSs and the beams of the second TRSs are considered to be equal (equal in QCL type D RS). By multiplexing the first TRSs and the second TRSs in the same time resources and different frequency resources, resource usage efficiency can be increased.

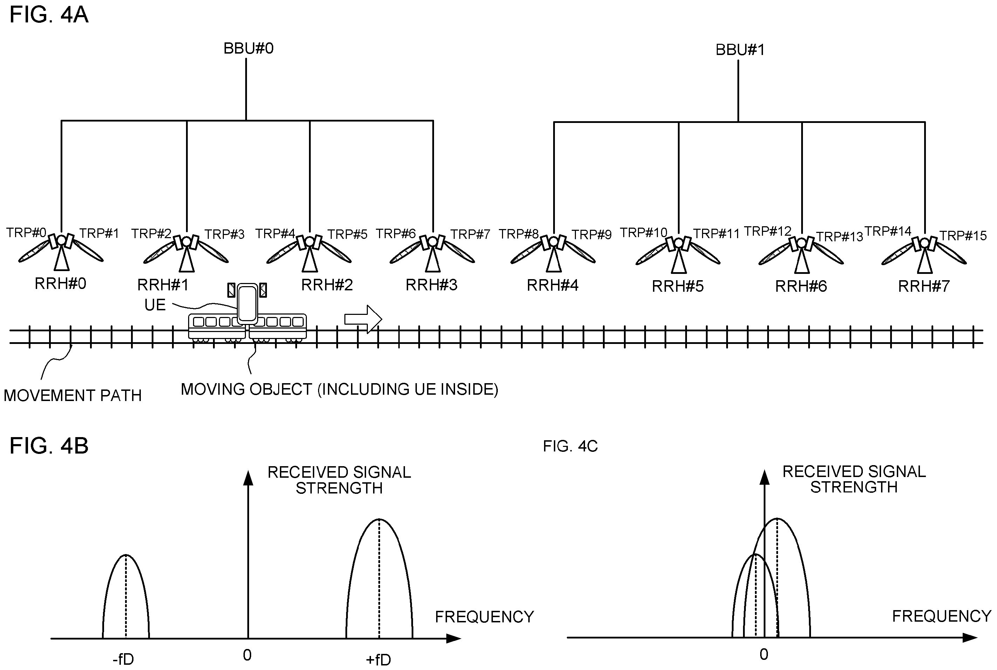

In the example in FIG. 4A, RRHs #0 to #7 are installed along a movement path of an HST. RRHs #0 to #3 are connected to baseband unit (BBU) #0, and RRHs #4 to #7 are connected to BBU #1. Each RRH is a bi-directional RRH and forms beams in both the travel direction of the movement path and the opposite direction to the travel direction by using respective transmission/reception points (TRPs).

In a reception signal in the example in FIG. 4B (single TRP (SFN)/scheme 1), when a UE receives a signal/channel (beam in a travel direction of an HST, beam from the rear of a UE) transmitted from TRP #(2n - 1) (n is an integer equal to or larger than 0), a minus Doppler shift (-fD in this example) occurs. When the UE receives a signal/channel (beam in the opposite direction to the travel direction of the HST, beam from the front of the UE) transmitted from TRP #2n (n is an integer equal to or larger than 0), a plus Doppler shift (+fD in this example) occurs.

For Rel. 17 or later versions, it is studied that a base station performs Doppler pre-(preliminary) compensation (correction) scheme (Pre-Doppler Compensation scheme, network (NW) pre-compensation scheme (HST NW pre-compensation scheme), TRP pre-compensation scheme, TRP-based pre-compensation scheme) in transmission of a downlink (DL) signal/channel to a UE in an HST from a TRP. By the TRP performing Doppler compensation in advance at the time of performing transmission of a DL signal/channel to the UE, this can reduce the influence of a Doppler shift at the time of reception of the DL signal/channel in the UE. In the present disclosure, a Doppler pre-compensation scheme may be a combination of scheme 1 and Doppler shift pre-compensation by a base station.

It is studied that, in the Doppler pre-compensation scheme, a TRS from each TRP is transmitted without Doppler pre-compensation being performed, and a PDSCH from each TRP is transmitted with Doppler pre-compensation being performed.

In the Doppler pre-compensation scheme, each TRP that forms a beam in the travel direction of a movement path and each TRP that forms a beam in the opposite direction to the travel direction of the movement path each perform Doppler correction and then transmit a DL signal/channel to the UE in the HST. In this example, TRP #(2n - 1) performs plus Doppler correction, and TRP #2n performs minus Doppler correction, to thereby reduce an influence of Doppler shift at the time of reception of signals/channels in the UE (FIG. 4C).

Note that, in the situation in FIG. 4C, since the UE receives a DL channel/signal from each TRP by using a TRS from the TRP, the number of TCI states of the PDSCHs may be two.

Further, for Rel. 17 or later versions, it is studied to use a TCI field (TCI state field) to dynamically switch a single TRP and an SFN. For example, by using an RRC information element/MAC CE (for example, Enhanced TCI States Activation/Deactivation for UE-specific PDSCH MAC CE)/DCI (TCI field), one or two TCI states are configured/indicated at each TCI codepoint (codepoint in the TCI field, DCI codepoint). When the UE is configured/indicated with one TCI state, the UE may determine to receive a PDSCH from a single TRP. When the UE is configured/indicated with two TCI states, the UE may determine to receive PDSCHs of an SFN using multi-TRP.

### (Simultaneous Beam Update for Multiple CCs)

In Rel. 16, one MAC CE can update beam indices (TCI states) of multiple CCs.

A UE can be configured with up to two applicable CC lists (for example, applicable-CC-list) by RRC. When two applicable CC lists are configured, the two respective applicable CC lists may correspond to intra-band CA in FR1 and intra-band CA in FR2.

A TCI state activation MAC CE of a PDCCH activates TCI states associated with the same CORESET ID on all the BWPs/CCs in a corresponding applicable CC list.

A TCI state activation MAC CE of a PDSCH activates TCI states on all the BWPs/CCs in a corresponding applicable CC list.

A spatial relation activation MAC CE of an A-SRS/SP-SRS activates spatial relations associated with the same SRS resource ID on all the BWPs/CCs in a corresponding applicable CC list.

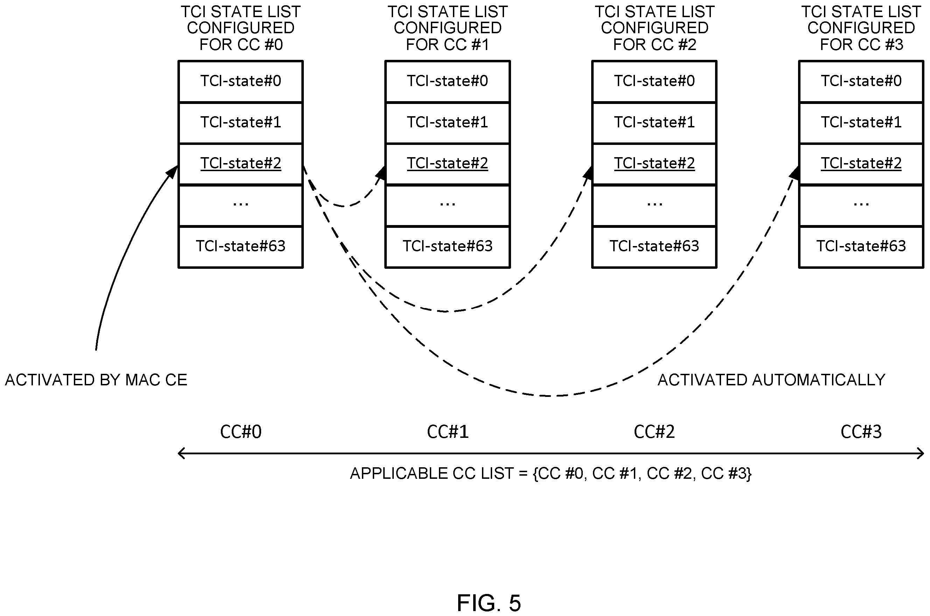

In the example in FIG. 5, a UE is configured with an applicable CC list indicating CCs #0, #1, #2, and #3 and a list indicating 64 TCI states for a CORESET or a PDSCH of each CC. When one TCI state of CC #0 is activated by a MAC CE, corresponding TCI states are activated in CCs #1, #2, and #3.

It is studied that such simultaneous beam update is applicable only to a case of a single TRP.

For a PDSCH, a UE may be based on procedure A below.

### {Procedure A}

The UE receives an activation command to map up to eight TCI states to codepoints of a DCI field (TCI field) in one CC/DL BWP or in one set of CCs/BWPs. When one set of TCI state IDs is activated for the one set of CCs/DL BWPs, an applicable CC list is then determined according to CCs indicated in the activation command, and the same set of TCI states is applied to all the DL BWPs in the indicated CCs. Only if the UE is not provided with multiple different values of CORESET pool indices (CORESETPoolIndex) in a CORESET information element (ControlResourceSet) and is not provided with at least one TCI codepoint mapped to two TCI states, one set of TCI state IDs can be activated for one set of CCs/DL BWPs.

For a PDCCH, a UE may be based on procedure B below.

### {Procedure B}

If the UE is provided with up to two cell lists for simultaneous TCI state activation by a simultaneous TCI update list (at least one of simultaneousTCI-UpdateList-r16 and simultaneousTCI-UpdateListSecond-r16), by a simultaneous TCI cell list (simultaneousTCI-CellList), the UE applies antenna port quasi co-location (QCL) provided by TCI states activated the same and having activated TCI state ID values, to a CORESET having an index p in all the configured DL BWPs in all the configured cells in one list determined based on a serving cell index provided by a MAC CE command. Only if the UE is not provided with multiple different values of CORESET pool indices (CORESETPoolIndex) in a CORESET information element (ControlResourceSet) and is not provided with at least one TCI codepoint mapped to two TCI states, a simultaneous TCI cell list can be provided for simultaneous TCI state activation.

For a semi-persistent (SP)/aperiodic (AP)-SRS, a UE may be based on procedure C below.

### {Procedure C}

For one set of CCs/BWPs, when spatial relation information (spatialRelationInfo) for an SP or AP-SRS resource configured by an SRS resource information element (higher layer parameter SRS-Resource) is activated/updated by a MAC CE, a CC applicable list is then indicated by a simultaneous spatial update list (higher layer parameter simultaneousSpatial-UpdateList-r16 or simultaneousSpatial-UpdateListSecond-r16), and the spatial relation information is applied to SP or AP-SRS resources having the same SRS resource ID in all the BWPs in the indicated CCs. Only if the UE is not provided with multiple different values of CORESET pool indices (CORESETPoolIndex) in a CORESET information element (ControlResourceSet) and is not provided with at least one TCI codepoint mapped to two TCI states, spatial relation information (spatialRelationInfo) for an SP or AP-SRS resource configured by an SRS resource information element (higher layer parameter SRS-Resource) is activated/updated for one set of CCs/BWPs by a MAC CE.

A simultaneous TCI cell list (simultaneousTCI-CellList) and a simultaneous TCI update list(s) (at least one of simultaneousTCI-UpdateList1-r16 and simultaneousTCI-UpdateList2-r16) are each a list of serving cells for which TCI relations can be updated simultaneously by a MAC CE. simultaneousTCI-UpdateList1-r16 and simultaneousTCI-UpdateList2-r16 do not include the same serving cells.

A simultaneous spatial update list(s) (at least one of higher layer parameters simultaneousSpatial-UpdatedList1-r16 and simultaneousSpatial-UpdatedList2-r16) is a list of serving cells for which spatial relations can be updated simultaneously by a MAC CE. simultaneousSpatial-UpdatedList1-r16 and simultaneousSpatial-UpdatedList2-r16 do not include the same serving cells.

Here, a simultaneous TCI update list and a simultaneous spatial update list are each configured by RRC, a CORESET pool index of each CORESET is configured by RRC, and a TCI codepoint mapped to each TCI state is indicated by a MAC CE.

### (Unified/common TCI Framework)

With a unified TCI framework, UL and DL channels can be controlled by a common framework. A unified TCI framework may indicate a common beam (common TCI state) and apply the common beam to all the UL and DL channels instead of defining a TCI state or a spatial relation for each channel as in Rel. 15, or apply a common beam for UL to all the UL channels while applying a common beam for DL to all the DL channels.

One common beam for both DL and UL or a common beam for DL and a common beam for UL (two common beams in total) are studied.

The UE may assume the same TCI state (joint TCI state, joint TCI pool, joint common TCI pool, joint TCI state set) for UL and DL. The UE may assume respective different TCI states (separate TCI states, separate TCI pools, UL separate TCI pool and DL separate TCI pool, separate common TCI pools, UL common TCI pool and DL common TCI pool) for UL and DL.

By beam management based on a MAC CE (MAC CE level beam indication), default UL and DL beams may be aligned. A default TCI state of a PDSCH may be updated to match to a default UL beam (spatial relation).

By beam management based on DCI (DCI level beam indication), a common beam/unified TCI state may be indicated from the same TCI pool (joint common TCI pool, joint TCI pool, set) for both UL and DL. X (>1) TCI states may be activated by a MAC CE. UL/DL DCI may select one from the X active TCI states. The selected TCI state may be applied to channels/RSs of both UL and DL.

The TCI pool (set) may be multiple TCI states configured by an RRC parameter or multiple TCI states (active TCI states, active TCI pool, set) activated by a MAC CE among the multiple TCI states configured by the RRC parameter. Each TCI state may be a QCL type A/D RS. As the QCL type A/D RS, an SSB, a CSI-RS, or an SRS may be configured.

The number of TCI states corresponding to each of one or more TRPs may be defined. For example, the number N (≥ 1) of TCI states (UL TCI states) to be applied to a UL channel/RS and the number M (≥ 1) of TCI states (DL TCI states) to be applied to a DL channel/RS may be defined. At least one of N and M may be notified/configured/indicated to a UE by higher layer signaling or physical layer signaling.

In the present disclosure, when it is described as N = M = X (where X is any integer), this may mean that X TCI states (corresponding to X TRPs) common to UL and DL (joint TCI states) are notified/configured/indicated to a UE.

When it is described as N = X (where X is any integer) and M = Y (where Y is any integer, Y may be equal to X (Y = X)), this may mean that X UL TCI states (corresponding to X TRP(s)) and Y DL TCI states (corresponding to Y TRP(s)) are notified/configured/indicated to a UE. The UL TCI states and the DL TCI state(s) may each mean a TCI state common to UL and DL (in other words, a joint TCI state) or may each mean a TCI state separately for either UL or DL (in other words, a separate TCI state).

For example, when it is described as N = M = 1, this may mean that one TCI state common to DL and UL for a single TRP is notified/configured/indicated to a UE (joint TCI state for a single TRP).

For example, when it is described as N = 1 and M = 1, this may mean that one UL TCI state and one DL TCI state for a single TRP are separately notified/configured/indicated to a UE (separate TCI states for a single TRP).

For example, when it is described as N = M = 2, this may mean that multiple (two) TCI states common to UL and DL for multiple (two) TRPs are notified/configured/indicated to a UE (joint TCI states for multiple TRPs).

For example, when it is described as N = 2 and M = 2, this may mean that multiple (two) UL TCI states and multiple (two) DL TCI states for multiple (two) TRPs are notified/configured/indicated to a UE (separate TCI states for multiple TRPs).

For example, when it is described as N = 2 and M = 1, this may mean that two TCI states common to UL and DL are notified/configured/indicated to a UE. In this case, the UE may use the two configured/indicated TCI states as UL TCI states while using one TCI state of the two configured/indicated TCI states as a DL TCI state.

For example, when it is described as N = 2 and M = 1, this may mean that two UL TCI states and one DL TCI state are notified/configured/indicated as separate TCI states to a UE.

Note that, in the above examples, cases where the values of N and M are each one or two have been described, but the values of N and M may each be three or more, and N and M may be different from each other.

A case of M > 1/N > 1 may indicate at least one of a TCI state indication for multiple TRPs and multiple TCI state indications for inter-band (inter band) CA.

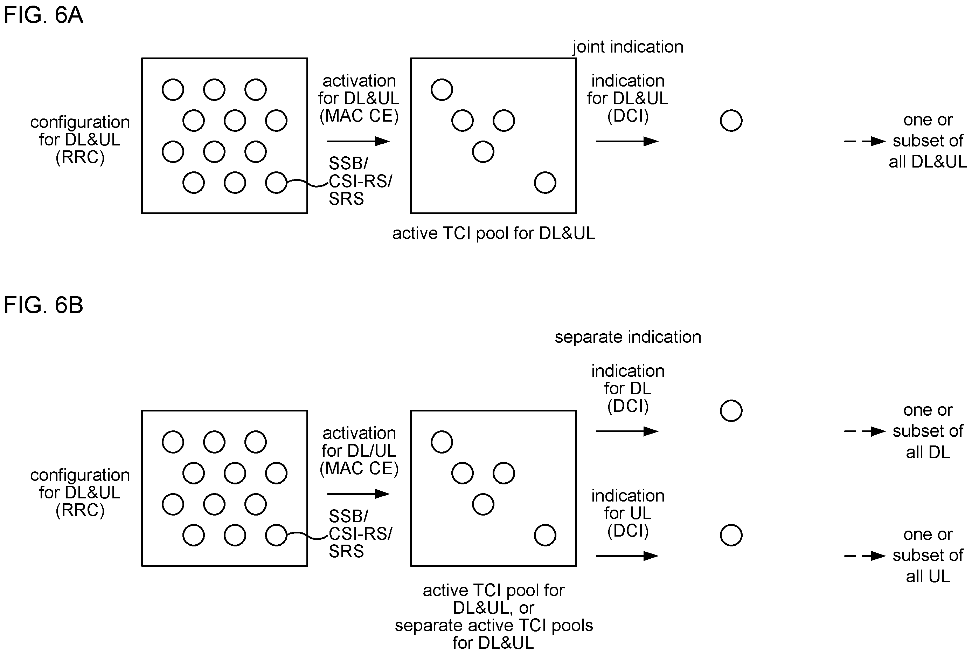

In the example in FIG. 6A, an RRC parameter (information element) configures multiple TCI states for both DL and UL. The MAC CE may activate multiple TCI states among the multiple configured TCI states. DCI may indicate one of the multiple activated TCI states. The DCI may be UL/DL DCI. The indicated TCI state may be applied to at least one (or all) of UL/DL channels/RSs. One DCI may indicate both a UL TCI and a DL TCI.

In the example in FIG. 6A, one dot may represent one TCI state applied to both UL and DL or may represent two respective TCI states applied to UL and DL.

At least one of the multiple TCI states configured by the RRC parameter and the multiple TCI states activated by the MAC CE may be referred to as a TCI pool (common TCI pool, joint TCI pool, TCI state pool). The multiple TCI states activated by the MAC CE may be referred to as an active TCI pool (active common TCI pool).

Note that, in the present disclosure, a higher layer parameter (RRC parameter) that configures multiple TCI states may be referred to as configuration information that configures multiple TCI states or simply as "configuration information." In the present disclosure, one of multiple TCI states being indicated by using DCI may be receiving indication information indicating one of multiple TCI states included in DCI or may simply be receiving "indication information."

In the example in FIG. 6B, an RRC parameter configures multiple TCI states for both DL and UL (joint common TCI pool). A MAC CE may activate multiple TCI states (active TCI pool) among the multiple configured TCI states. Respective (different, separate) active TCI pools for UL and DL may be configured/activated.

DL DCI or a new DCI format may select (indicate) one or more (for example, one) TCI states. The selected TCI state(s) may be applied to one or more (or all) DL channels/RSs. The DL channel(s) may be a PDCCH/PDSCH/CSI-RS(s). The UE may determine the TCI state of each of the DL channels/RSs by using operation of a TCI state (TCI framework) of Rel. 16. UL DCI or a new DCI format may select (indicate) one or more (for example, one) TCI states. The selected TCI state(s) may be applied to one or more (or all) UL channels/RSs. The UL channel(s) may be a PUSCH/SRS/PUCCH(s). Thus, different pieces of DCI may indicate a UL TCI and a DL DCI separately.

Existing DCI format 1_1/1_2 may be used for indication of a common TCI state.

The DCI format indicating a TCI state may be a specific DCI format. For example, the specific DCI format may be DCI format 1_1/1_2 (defined in Rel. 15/16/17).

The DCI format indicating a TCI state (DCI format 1_1/1_2) may be a DCI format without DL assignment. In the present disclosure, a DCI format without DL assignment, a DCI format not scheduling a PDSCH (DCI format 1_1/1_2), a DCI format not including one or more specific fields (DCI format 1_1/1_2), a DCI format with one or more specific fields being set at a fixed value(s) (DCI format 1_1/1_2), and the like may be used interchangeably.

For a DCI format without DL assignment (DCI format not including one or more specific fields), the specific field(s) may be a field(s) other than a TCI field, a DCI format identifier field, a carrier indicator field, a bandwidth part (BWP) indicator field, a time domain resource assignment (TDRA) field, a Downlink Assignment Index (DAI) field (if configured), a transmission power control (TPC) command field (for a scheduled PUCCH), a PUCCH resource indicator field, and PDSCH-to-HARQ-ACK feedback timing indicator (PDSCH-to-HARQ feedback timing indicator) field (if present). The specific field(s) may be set as a reserved field(s) or may be ignored.

For a DCI format without DL assignment (DCI format with one or more specific fields being set at a fixed value(s)), the specific field(s) may be a redundancy version (RV) field, a modulation and coding scheme (MCS) field, a new data indicator field, and a frequency domain resource assignment (FDRA) field.

The RV field may be entirely set at 1. The MCS field may be entirely set at 1. The NDI field may be set at 0. A Type 0 FDRA field may be entirely set at 0. A Type 1 FDRA field may be entirely set at 1. An FDRA field for dynamic switch (higher layer parameter dynamicSwitch) may be entirely set at 0.

A common TCI framework may include separate TCI states for DL and UL.

### (MAC CE)

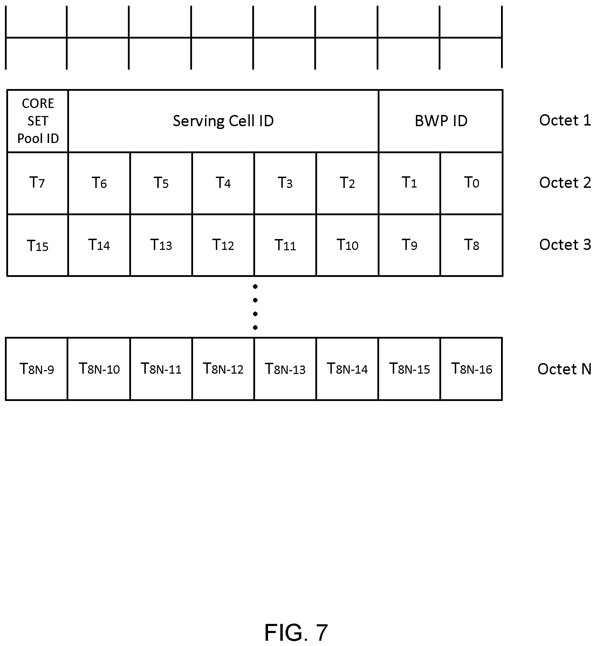

In Rel. 16, for activation/deactivation of a TCI state of a UE-specific PDSCH, a MAC CE (TCI States Activation/Deactivation for UE-specific PDSCH MAC CE) is used (see FIG. 7).

The MAC CE is identified by a MAC subheader having a Logical Channel ID (LCID).

The MAC CE may be used in an environment using a single TRP or multi-DCI based multi TRP.

The MAC CE may include a serving cell ID field, a BWP ID field, a field (Ti) for indicating TCI state activation/deactivation, and a CORESET pool ID field.

The serving cell ID field may be a field for indicating a serving cell to which the MAC CE is to be applied. The BWP ID field may be a field for indicating a DL BWP to which the MAC CE is to be applied. The CORESET pool ID field may be a field indicating the correspondence (mapping) between an activated TCI state and a codepoint of a TCI field indicated by DCI set in the field Ti (codepoint of DCI TCI) is specific to ControlResourceSetId configured by a CORESET pool ID.

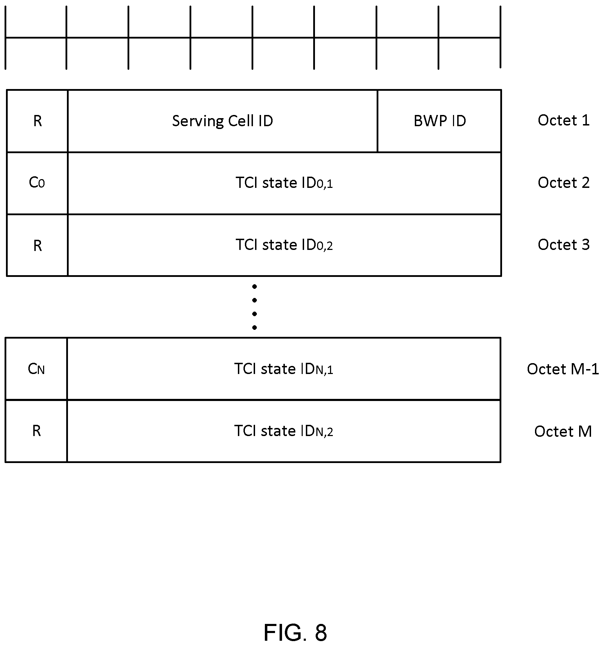

In Rel. 16, for activation/deactivation of a TCI state of a UE-specific PDSCH, a MAC CE (Enhanced TCI States Activation/Deactivation for UE-specific PDSCH MAC CE) is also used (see FIG. 8).

The MAC CE is identified by a MAC PDU subheader having an eLCID.

The MAC CE may be used in an environment using single-DCI based multi TRP.

The MAC CE may include a serving cell ID field, a BWP ID field, fields each being for indicating a TCI state identified by TCI-StateID (TCI state ID_{i,j} (i is an integer from 0 to N, j is 1 or 2)), fields (Ci) each indicating whether or not TCI state IDi,2 is present in a corresponding octet, and reserved bit fields (R, set to 0).

"i" may correspond to an index of a codepoint of a TCI field indicated by DCI. "TCI state ID_{i,j}" may indicate a j-th TCI state of the codepoint of an i-th TCI field.

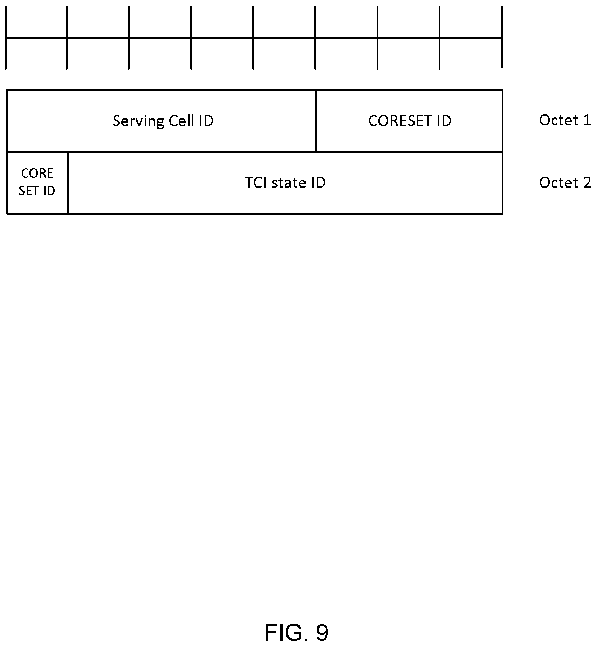

In Rel. 16, for activation/deactivation of a TCI state of a UE-specific PDCCH/CORESET, a MAC CE (TCI State Indication for UE-specific PDCCH MAC CE) is also used (see FIG. 9).

The MAC CE is identified by a MAC subheader having an LCID.

The MAC CE may include a serving cell ID field, a field indicating a CORESET (CORESET ID) for which a TCI state is indicated, and a field (TCI state ID) for indicating a TCI state applicable to the CORESET identified by the CORESET ID.

### (Analysis)

It is studied that a TCI state introduced in Rel. 17 (Rel-17 TCI state, common TCI state) indicates one TCI state (M = 1, N = 1 or M = N = 1). In other words, it is studied that a Rel-17 TCI state is applicable only to a situation using a single TRP.

It is studied that a TCI state/spatial relation defined in Rel. 15/16 or previous versions (excluding a TCI state related to a reference signal for positioning) and a Rel-17 TCI state are not configured in the same band.

In this case, in the same band as a band in which the Rel-17 TCI state is configured, a function using a Rel-15/16 TCI state/spatial relation defined in Rel. 15 to Rel. 17 (feature, for example, operation using multi-TRP) cannot be configured.

Accordingly, it is necessary to enhance a common TCI state (Rel-17 TCI state) (for example, indicate two or more TCI states by using a MAC CE/DCI) in order to support a function using a Rel-15/16 TCI state/spatial relation including a multi-TRP scheme.

For example, for Rel. 18 or later versions, it is studied that a common TCI state is applicable to at least one multi-TRP scheme as those defined in Rel. 16/17 below:
- NCJTed single-DCI based PDSCHs (Rel. 16)
- NCJTed multi-DCI based PDSCHs (Rel. 16)
- single-DCI based SDMed/TDMed/FDMed PDSCH repetition transmission (Rel. 16)
- PDCCH/PUCCH/PUSCH repetition transmission using multiple TRPs (Rel. 17)
- operation related to inter-cell multi-TRP (Rel. 17)
- beam management for multi-TRP (Rel. 17)
- HST/SFN (Rel. 17)

Enhancement of a common TCI state may be used for beam indication in inter-cell (inter-band) carrier aggregation. In the beam indication in inter-cell (inter-band) carrier aggregation, one MAC CE/DCI may be used to indicate one or more TCI states in multiple different bands.

However, in transmission/reception of signals/channels using multi-TRP, study about configuration/indication/application of a common TCI state(s) has not been performed sufficiently. More specifically, study about switching between single-TRP channel/single transmission/reception and multi-TRP channel/signal transmission/reception in a case of using a common TCI state(s) has not been performed sufficiently. In addition, study about a method of mapping one or multiple TCI states for each channel/signal has not been performed sufficiently. Unless study about these is sufficient, degradation in communication quality, throughput reduction, and the like may occur.

Thus, the inventors of the present invention came up with the idea of a method of appropriately configuring/indicating/applying a TCI state(s) even when a TCI state(s) is applied to multiple types of signals/channels in transmission/reception of signals/channels using multi-TRP.

Embodiments according to the present disclosure will be described in detail with reference to the drawings as follows. The radio communication methods according to respective embodiments may each be employed individually, or may be employed in combination.

In the present disclosure, "A/B/C" and "at least one of A, B, and C" may be used interchangeably. In the present disclosure, a cell, a serving cell, a CC, a carrier, a BWP, a DL BWP, a UL BWP, an active DL BWP, an active UL BWP, and a band may be used interchangeably. In the present disclosure, an index, an ID, an indicator, and a resource ID may be used interchangeably. In the present disclosure, a sequence, a list, a set, a group, a cluster, a subset, and the like may be used interchangeably. In the present disclosure, "support," "control," "controllable," "operate," and "operable" may be used interchangeably.

In the present disclosure, configuration (configure), activation (activate), update, indication (indicate), enabling (enable), specification (specify), and selection (select) may be used interchangeably.

In the present disclosure, the higher layer signaling may be, for example, any one or combinations of Radio Resource Control (RRC) signaling, Medium Access Control (MAC) signaling, broadcast information, and the like. In the present disclosure, RRC, RRC signaling, an RRC parameter, a higher layer, a higher layer parameter, an RRC information element (IE), an RRC message, and a configuration may be used interchangeably.

The MAC signaling may use, for example, a MAC control element (MAC CE), a MAC Protocol Data Unit (PDU), or the like. In the present disclosure, a MAC CE, an update command, and an activation/deactivation command may be used interchangeably.

The broadcast information may be, for example, a master information block (MIB), a system information block (SIB), minimum system information (Remaining Minimum System Information (RMSI), SIB1), other system information (OSI), or the like.

In the present disclosure, a beam, a spatial domain filter, spatial setting, a TCI state, a UL TCI state, a unified TCI state, a unified beam, a common TCI state, a common beam, TCI assumption, QCL assumption, a QCL parameter, a spatial domain reception filter, a UE spatial domain reception filter, a UE receive beam, a DL beam, a DL receive beam, DL precoding, a DL precoder, a DL-RS, an RS of QCL type D in a TCI state/QCL assumption, an RS of QCL type A in a TCI state/QCL assumption, a spatial relation, a spatial domain transmission filter, a UE spatial domain transmission filter, a UE transmit beam, a UL beam, a UL transmit beam, UL precoding, a UL precoder, and a PL-RS may be used interchangeably. In the present disclosure, a QCL type X-RS, a DL-RS associated with QCL type X, a DL-RS having QCL type X, a DL-RS source, an SSB, a CSI-RS, and an SRS may be used interchangeably.

In the present disclosure, a panel, a UE panel, a panel group, an antenna group, a UE capability value, a UE capability value set, a specific (pool) index included in a PUSCH configuration, a specific (pool) index included in a PUCCH configuration, a specific (pool) index included in an SRS configuration, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be used interchangeably. The UE capability set may include the maximum number of SRS ports supported, for example.

The panel may be related to at least one of a group index of an SSB/CSI-RS group, a group index of group-based beam report, and a group index of an SSB/CSI-RS group for group-based beam report.

A panel Identifier (ID) and a panel may be used interchangeably. In other words, a TRP ID and a TRP, a CORESET group ID and a CORESET group, and the like may be used interchangeably.

In the present disclosure, a TRP, a transmission point, a panel, a DMRS port group, a CORESET pool, and one of two TCI states associated with one codepoint of a TCI field may be used interchangeably.

In the present disclosure, a single TRP, a single-TRP system, single-TRP transmission, and a single PDSCH may be used interchangeably. In the present disclosure, multi-TRP (multiple TRPs), a multi-TRP system, multi-TRP transmission, and multi-PDSCH may be used interchangeably. In the present disclosure, single DCI, a single PDCCH, single-DCI based multi-TRP, and two TCI states in at least one TCI codepoint being activated may be used interchangeably.

In the present disclosure, a single TRP, a channel using a single TRP, a channel using one TCI state/spatial relation, multi-TRP being not enabled by RRC/DCI, multiple TCI states/spatial relations being not enabled by RRC/DCI, and one CORESET pool index (CORESETPoolIndex) value being not configured for any CORESET and any codepoint of a TCI field being not mapped to two TCI states may be used interchangeably.

In the present disclosure, multi-TRP, a channel using multi-TRP, a channel using multiple TCI states/spatial relations, multi-TRP being enabled by RRC/DCI, multiple TCI states/spatial relations being enabled by RRC/DCI, and at least one of single-DCI based multi-TRP and multi-DCI based multi-TRP may be used interchangeably. In the present disclosure, multi-DCI based multi-TRP and one CORESET pool index (CORESETPoolIndex) value being configured for a CORESET may be used interchangeably. In the present disclosure, single-DCI based multi-TRP and at least one codepoint in a TCI field being mapped to two TCI states may be used interchangeably.

In the present disclosure, TRP #1 (first TRP) may correspond to CORESET pool index = 0 or may correspond to the first TCI state of two TCI states corresponding to one codepoint of a TCI field. TRP #2 (second TRP) TRP #1 (first TRP) may correspond to CORESET pool index = 1 or may correspond to the second TCI state of two TCI states corresponding to one codepoint of a TCI field.

In the present disclosure, single DCI (sDCI), a single PDCCH, a single-DCI based multi-TRP system, sDCI-based MTRP, and two TCI states in at least one TCI codepoint being activated may be used interchangeably.

In the present disclosure, multi-DCI (mDCI), multi-PDCCH, a multi-DCI based multi-TRP system, mDCI-based MTRP, and two CORESET pool indices or CORESET pool index = 1 (or a value equal to one or greater) being configured may be used interchangeably.

QCL in the present disclosure and QCL type D may be used interchangeably.

In the present disclosure, "TCI state A is of the same QCL type D as that of TCI state B," "TCI state A and TCI state B are the same," "TCI state A is QCL type D with TCI state B," and the like may be used interchangeably.

In the present disclosure, a codepoint of a DCI field 'Transmission Configuration Indication,' a TCI codepoint, a DCI codepoint, and a TCI field codepoint may be used interchangeably.

In the present disclosure, a single TRP and an SFN may be used interchangeably. In the present disclosure, an HST, an HST scheme, a scheme for high speed movement, scheme 1, scheme 2, an NW pre-compensation scheme, HST scheme 1, HST scheme 2, and an HST NW pre-compensation scheme may be used interchangeably.

In the present disclosure, a PDSCH/PDCCH using a single TRP, a PDSCH/PDCCH based on a single TRP, and a single TRP PDSCH/PDCCH may be used interchangeably. In the present disclosure, a PDSCH/PDCCH using an SFN, a PDSCH/PDCCH using an SFN in multi, a PDSCH/PDCCH based on an SFN, and an SFN PDSCH/PDCCH may be used interchangeably.

In the present disclosure, receiving a DL signal (PDSCH/PDCCH) by using an SFN may mean receiving the same data (PDSCH)/control information (PDCCH) and/or by using the same time/frequency resource, from a plurality of transmission/reception points. Receiving a DL signal by using an SFN may mean receiving the same data/control information and/or by using the same time/frequency resource, by using a plurality of TCI states/spatial domain filters/beams/QCLs.

In the present disclosure, an HST-SFN scheme, an SFN scheme of Rel. 17 or later versions, a new SFN scheme, a new HST-SFN scheme, an HST-SFN scenario of Rel. 17 or later versions, an HST-SFN scheme for an HST-SFN scenario, an SFN scheme for an HST-SFN scenario, scheme 1, HST-SFN scheme A/B, HST-SFN type A/B, a Doppler pre-compensation scheme, and at least one of scheme 1 (HST scheme 1) and a Doppler pre-compensation scheme may be used interchangeably.

In the present disclosure, a Doppler pre-compensation scheme, a base station pre-compensation scheme, a TRP pre-compensation scheme, a pre-Doppler compensation scheme, an NW pre-compensation scheme, an HST NW pre-compensation scheme, a TRP pre-compensation scheme, a TRP-based pre-compensation scheme, HST-SFN scheme A/B, and HST-SFN type A/B may be used interchangeably. In the present disclosure, a pre-compensation scheme, a reduction scheme, an improvement scheme, and a correction scheme may be used interchangeably.

In the present disclosure, PDCCHs/search spaces (SSs)/CORESETs having a linkage, linked PDCCHs/SSs/CORESETs, and a pair of PDCCHs/SSs/CORESETs may be used interchangeably. In the present disclosure, a PDCCH/search space (SS)/CORESET having no linkage, a not linked PDCCH/SS/CORESET, and a single PDCCH/SS/CORESET may be used interchangeably.

In the present disclosure, two linked CORESETs for PDCCH repetition and two CORESETs associated with two respective linked SS sets may be used interchangeably.

In the present disclosure, SFN-PDCCH repetition, PDCCH repetition, two linked PDCCHs, one DCI being received over two linked search spaces (SSs)/CORESETs may be used interchangeably.

In the present disclosure, PDCCH repetition, SFN-PDCCH repetition, PDCCH repetition for higher reliability, a PDCCH for higher reliability, a PDCCH for reliability, and two linked PDCCHs may be used interchangeably.

In the present disclosure, a PDCCH reception method, PDCCH repetition, SFN-PDCCH repetition, an HST-SFN, and an HST-SFN scheme may be used interchangeably.

In the present disclosure, a PDSCH reception method, single-DCI based multi-TRP, and an HST-SFN scheme may be used interchangeably.

In the present disclosure, single-DCI based multi-TRP repetition may be NCJT of an enhanced mobile broadband (eMBB) service (low priority, priority degree 0), or may be repetition of a URLLC service, that is, an ultra-reliable and low latency communications service (high priority, priority degree 1).

In each of the embodiments of the present disclosure, a PDSCH for multiple single-DCI based TRPs and a PDSCH to which TDM/FDM/SDM for multiple TRPs (defined in Rel. 16) is applied may be used interchangeably.

In each of the embodiments of the present disclosure, a PDSCH for multiple TRPs and a PDSCH to which TDM/FDM/SDM for multiple single-DCI based TRPs (defined in Rel. 16) is applied may be used interchangeably.

In each of the embodiments of the present disclosure, a PUSCH/PUCCH/PDCCH for multiple single-DCI based TRPs and repetition transmission (repetition) of a PUSCH/PUCCH/PDCCH for multiple TRPs (defined in Rel. 17 or later versions) may be used interchangeably.

In each of the embodiments of the present disclosure, an SFN PDSCH/PDCCH and an SFN PDSCH/PDCCH defined in Rel. 17 or later versions may be used interchangeably.

In each of the embodiments of the present disclosure, use of multiple multi-DCI based TRPs being configured may mean that CORESET pool index = 1 is configured. Alternatively, use of multiple multi-DC based TRPs being configured may mean that two different values (for example, 0 and 1) of a CORESET pool index are configured.

In each of the embodiments of the present disclosure, UL transmission using multiple panels may mean a UL transmission scheme using multiple panels of a UE by DCI enhancement.

In each of the embodiments of the present disclosure, if a joint TCI state/separate TCI state in a unified TCI state framework is not applicable to each channel/signal, the above-described default TCI state/QCL/spatial relation may be used to determine the TCI state/QCL/spatial relation of the channel.

Each of the embodiments of the present disclosure below may be applied to transmission/reception of any channel/signal being a target of application of a unified TCI state framework defined in Rel. 17 or later versions described above.

In the present disclosure, applying a TCI state to each channel/signal/resource may mean applying a TCI state to transmission/reception of each channel/signal/resource.

In the present disclosure, small, little, short, and low may be used interchangeably. In the present disclosure, "ignore," "drop," "cancel," "suspend," and "postpone" may be used interchangeably.

In the present disclosure, repetition, repetition transmission, and repetition reception may be used interchangeably.

In the present disclosure, a channel, a signal, and a channel/signal may be used interchangeably. In the present disclosure, a DL channel, a DL signal, a DL signal/channel, transmission/reception of a DL signal/channel, DL reception, and DL transmission may be used interchangeably. In the present disclosure, a UL channel, a UK signal, a UL signal/channel, transmission/reception of a UL signal/channel, UL reception, and UL transmission may be used interchangeably.

In the present disclosure, a first TCI state may correspond to a first TRP. In the present disclosure, a second TCI state may correspond to a second TRP. In the present disclosure, an n-th TCI state may correspond to an n-th TRP.

In the present disclosure, the value of a first CORESET pool index (for example, 0), the value of a first TRP index (for example, 1), and a first TCI state (first DL/UL (joint/separate) TCI state) may correspond to each other. In the present disclosure, the value of a second CORESET pool index (for example, 1), the value of a second TRP index (for example, 2), and a second TCI state (second DL/UL (joint/separate) TCI state) may correspond to each other.

Note that, in each of the embodiments of the present disclosure below, description will be mainly given of a method targeting two TRPs for application of multiple TCI states in transmission/reception using multiple TRPs (in other words, at least one of N and M is 2). However, the number of TRPs may be three or more (more than one), and each embodiment may be applied in accordance with the number of TRPs. In other words, at least one of N and M may be a number larger than two.

### (Radio Communication Method)

### <Zeroth Embodiment>

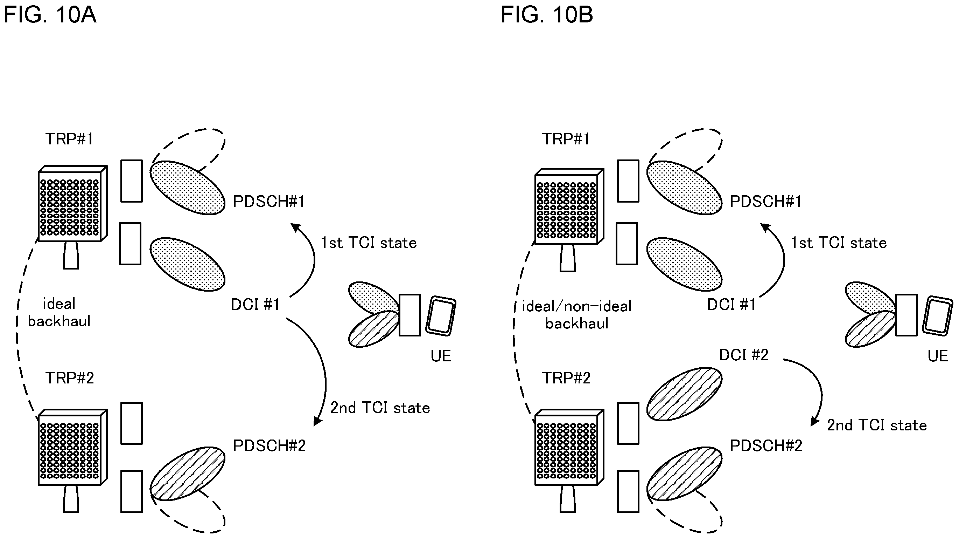

It may be assumed that single-DCI based multi-TRP are supported when multi-TRP use ideal backhaul (see FIG. 10A).

In this case, single beam indication DCI may indicate multiple TCI states for the respective TRPs. The multiple TCI states may be two joint TCI states at maximum or four separate DL/UL TCI states (two DL TCI states and two UL TCI states) at maximum, for example.

In the present disclosure, one TCI state may mean one joint (DL/UL) TCI state or may mean at least one of one DL (separate) TCI state and one UL (separate) TCI state.

It may be assumed that multi-PDCCH (DCI) are supported when multi-TRP use ideal backhaul/non-ideal backhaul (see FIG. 10B).

In this case, single DCI associated with one TRP (CORESET pool index) may indicate a TCI state corresponding to the TRP.

Note that the ideal backhaul may be referred to as DMRS port group type 1, reference signal related group type 1, antenna port group type 1, CORESET pool type 1, and the like. The non-ideal backhaul may be referred to as DMRS port group type 2, reference signal related group type 2, antenna port group type 2, CORESET pool type 2, and the like. The names are not limited to these.

A field indicating a TCI state (TCI field) included in DCI may conform to at least one of choices 0-1 and 0-2 below.

### {Choice 0-1}

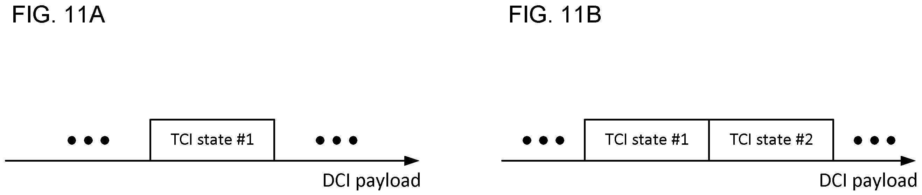

A TCI field defined in Rel. 15/16 or previous versions may be reused (see FIG. 11A). As shown in FIG. 11A, DCI may include one TCI field. The number of bits of the TCI field may be a specific number (for example, three).

### {Choice 0-2}

A TCI field defined in Rel. 15/16 or previous versions may be enhanced (see FIG. 11B). For example, DCI may include multiple (for example, two) TCI fields. The number of bits of each TCI field may be a specific number (for example, three).

In choice 0-2, for DCI without DL assignment, DCI overhead is never added. In contrast, for DCI with DL assignment, DCI overhead is added.

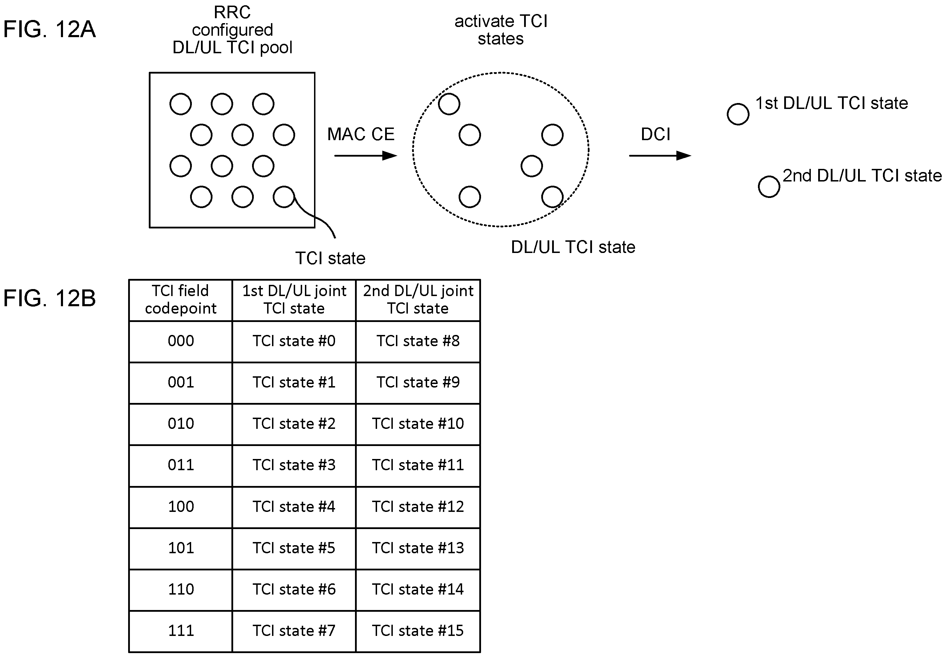

For single-DCI based multi-TRP, in a case of joint TCI states, DL/UL (joint) TCI states may be activated for a UE by using a MAC CE. Subsequently, the UE may be indicated with a first DL/UL (joint) TCI state and a second DL/UL (joint) TCI state by using DCI (beam indication) (see FIG. 12A).

A TCI codepoint indicated by the beam indication may correspond to one or multiple (two) TCI states (first joint TCI state/second joint TCI state) (see FIG. 12B).

The example shown in FIG. 12B shows an example that all the TCI codepoints corresponding to active TCI states each correspond to two TCI states. However, such association may be used that at least one of the TCI codepoints corresponding to the active TCI states corresponds to two TCI states. Using such association enables dynamic switching between a single TRP and multi-TRP.

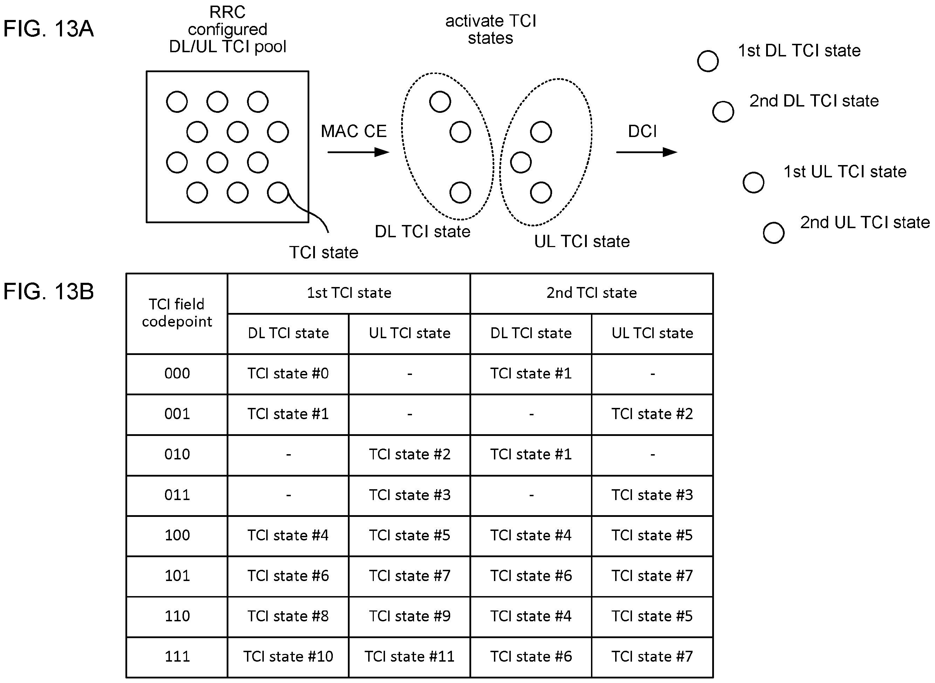

For single-DCI based multi-TRP, in a case of separate TCI states, DL (separate) TCI states and UL (separate) TCI states may be activated for a UE by using a MAC CE. Subsequently, the UE may be indicated with a first DL (separate) TCI state and a first UL (separate) TCI state as well as a second DL (separate) TCI state and a second UL (separate) TCI state by using DCI (beam indication) (see FIG. 13A).

A TCI codepoint indicated by the beam indication may correspond to one or multiple (two) TCI states (first separate (DL/UL) TCI state(s)/second separate (DL/UL) TCI state(s)) (see FIG. 13B).

The example shown in FIG. 13B shows an example that all the TCI codepoints corresponding to active TCI states each correspond to two TCI states (first separate (DL/UL) TCI state(s)/second separate (DL/UL) TCI state(s)). However, such association may be used that at least one of the TCI codepoints corresponding to the active TCI states corresponds to two TCI states. Using such association enables dynamic switching between a single TRP and multi-TRP.

Note that FIG. 13A shows the example that separate TCI states are activated for a DL TCI state and a UL TCI state, for TCI states activated by a MAC CE. However, even in a case of separate TCI states, activated DL TCI states and UL TCI states may include a common TCI state(s).

For multi-DCI based multi-TRP, at least one of configuration by RRC, activation by a MAC CE, and indication by DCI for TCI states may be performed for each CORESET pool index.

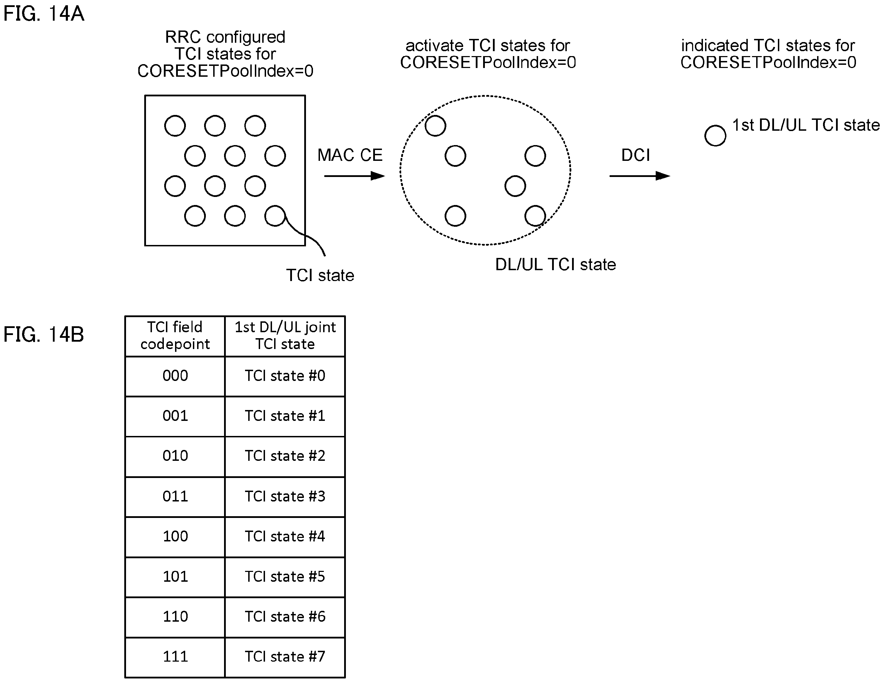

For multi-DCI based multi-TRP, in a case of joint TCI states, configuration by RRC, activation by a MAC CE, and indication by DCI for TCI states may be performed for a UE for a CORESET pool index having a first value (for example, 0) (see FIG. 14A). An indicated TCI state corresponding to the CORESET pool index having the first value may be referred to as a first TCI state.

A TCI codepoint indicated by the beam indication may correspond to one TCI state (first joint TCI state) (see FIG. 14B) .

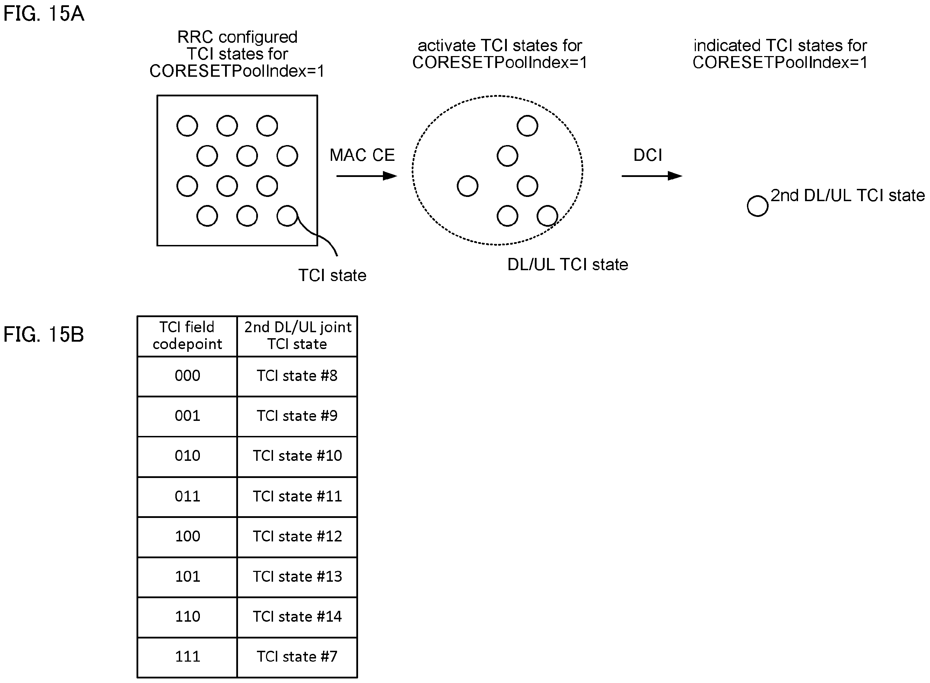

For multi-DCI based multi-TRP, in a case of joint TCI states, configuration by RRC, activation by a MAC CE, and indication by DCI for TCI states may be performed for a UE for a CORESET pool index having a second value (for example, 1) (see FIG. 15A). An indicated TCI state corresponding to the CORESET pool index having the second value may be referred to as a second TCI state.

A TCI codepoint indicated by the beam indication may correspond to one TCI state (second joint TCI state) (see FIG. 15B) .

When pieces of DCI corresponding to respective CORESET pool indices indicate the same TCI state (TCI state ID) (for example, when TCI state #7 corresponding to a TCI codepoint "111" in FIG. 14B and FIG. 15B is indicated), the UE may determine that one TCI state is indicated. In this case, the UE may perform operation using a single TRP.

Note that, for the multi-DCI based multi-TRP, an example using joint TCI states has been described. However, this embodiment is also applicable to a case using separate TCI states, as appropriate.

In the present disclosure, an indicated TCI state, a Rel-17 TCI state, a common TCI state, and a unified TCI state may be used interchangeably. In the present disclosure, a common TCI state, a Rel-17 TCI state, and a Rel-18 TCI state applied to channels/signals using multi-TRP may be used interchangeably.

A UE may apply an indicated TCI state to a specific channel/signal.

The specific channel/signal may be a UE-specific (dedicated) DL channel/signal. The UE-specific DL channel/signal may be a UE-specific PDCCH/PDSCH/CSI-RS (for example, aperiodic (A-)CSI-RS).

The specific channel/signal may be a specific UL channel/signal. The specific UL channel/signal may be at least one of a PUSCH indicated by DCI (indicated by dynamic grant), a configured grant PUSCH, multiple (all) specific PUCCHs (resources), and an SRS (for example, an aperiodic (A-)SRS).

One or multiple (for example, two) indicated TCI states may be indicated based on the method described in the zeroth embodiment described above.

Each of the embodiments of the present disclosure below may be applied to a single-TRP PDSCH.

The single-TRP PDSCH may be scheduled by specific DCI (DCI format). The specific DCI format may be DCI format 1_0 (or a DCI format including no TCI field), for example. For example, the specific DCI format may be DCI format 1_1/1_2. The specific DCI format may indicate one TCI state.

QCL assumption of the single-TRP PDSCH may be a default TCI state. The default TCI state may be one TCI state (in any DCI format).

For a UE, no multi-TRP repetition transmission may be configured. In this case, the single-TRP PDSCH may be scheduled as a single-layer MIMO PDSCH (with single layer MIMO).

The singe-TRP PDSCH may be a PDSCH of a case where multi-TRP (for example, a CORESET pool indices) are not configured for the UE.

The single-TRP PDSCH may be a PDSCH scheduled by a CORESET at least with a CSS. The single-TRP PDSCH may be a PDSCH scheduled by a CORESET only with a CSS (or CSS excluding type 3 CSS).

Each of the embodiments of the present disclosure below may be applied to a multi-TRP PDSCH.

The single-TRP PDSCH may be scheduled by specific DCI (DCI format). The specific DCI format may be DCI format 1_1/1_2. The specific DCI format may indicate two TCI states.

QCL assumption of the multi-TRP PDSCH may be default TCI states. The default TCI states may be two TCI state (in any DCI format).

For a UE, no multi-TRP repetition transmission may be configured. In this case, the multi-TRP PDSCH may be scheduled as a multi-layer MIMO PDSCH (with single layer MIMO).

The multi-TRP PDSCH may be a PDSCH of a case where multi-TRP repetition transmission is configured for the UE. In this case, the multi-TRP PDSCH may be scheduled as a PDSCH for repetition transmission (using TDM/FDM/SDM) (with repetition).

The multi-TRP PDSCH may be a PDSCH of a case where SFN scheme A/B is configured for the UE. The multi-TRP PDSCH may be a PDSCH having multiple TCI states.

Each of the embodiments of the present disclosure below may be applied to a single-TRP PDCCH.

The single-TRP PDCCH may be a PDCCH related to a CORESET for which SFN scheme A/B is not configured.

The single-TRP PDCCH may be a PDCCH related to a CORESET for which repetition transmission (of two linked SSs) is not configured.

Each of the embodiments of the present disclosure below may be applied to a multi-TRP PDCCH.

The multi-TRP PDCCH may be a PDCCH related to a CORESET for which SFN scheme A/B is configured.

Each of the embodiments of the present disclosure below may be applied to a single-TRP PUSCH/PUCCH.

The single-TRP PUSCH/PUCCH may be a PUSCH/PUCCH for which multi-TRP repetition transmission is not configured.

Each of the embodiments of the present disclosure below may be applied to a multi-TRP PUSCH/PUCCH.

The multi-TRP PUSCH/PUCCH may be a PUSCH/PUCCH for which multi-TRP repetition transmission is configured.

Each of the embodiments of the present disclosure below may be applied to a single/multi-TRP CSI-RS/SRS.

### <First Embodiment>

In a first embodiment, description will be given of application of TCI states and the number of TCI states to be configured/activated, when at least one of M and N above is two or larger.

In each embodiment of the present disclosure below, an example where a channel to which a TCI state(s) is to be applied is a PDSCH will be given. However, this is not restrictive. In other words, a PDSCH in the present embodiment and any channel/signal such as a PDCCH/PUSCH/PUCCH/SRS/CSI-RS may be used interchangeably.

A UE may apply at least either M TCI states or N TCI states (for example, M and N are each a number equal to or larger than 2) (joint TCI states or separate (DL/UL) TCI states) at maximum to DL/UL channels/signals.

The UE may be configured/indicated with at least either M TCI states or N TCI states (for example, M and N are each a number equal to or larger than two) (joint TCI states or separate (DL/UL) TCI states) at maximum.

For a single-TRP PDSCH, the UE may select/determine/apply one TCI state from the configured/indicated TCI states.

For multi-TRP PDSCHs, the UE may select/determine/apply both/all of the TCI states of the configured/indicated TCI states.

Note that one or multiple (two) TCI states configured/indicated for the UE may be a TCI state to be used as a default TCI state by the UE.

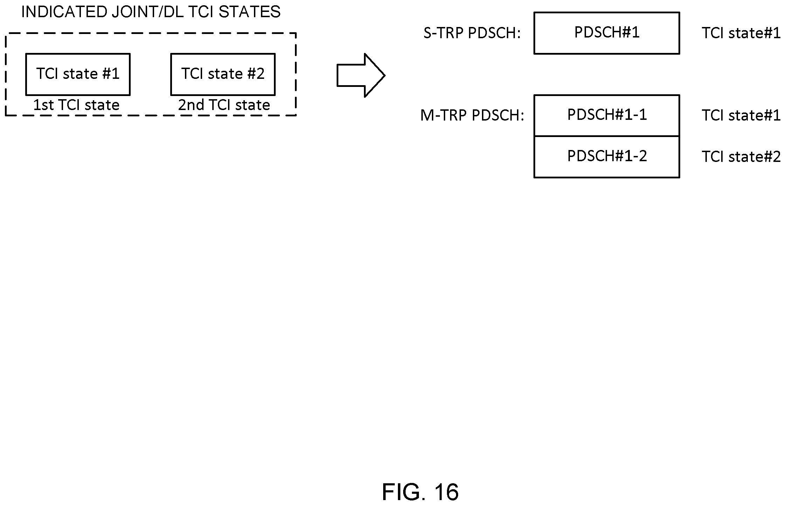

FIG. 16 is a diagram to show an example of configuration/indication of TCI states according to the first embodiment. In the example shown in FIG. 16, for a UE, two TCI states (here, as joint/(separate) DL TCI states, TCI state #1 and TCI state #2) are indicated. Here, a first TCI state is TCI state #1, and a second TCI state is TCI state #2.

In the example shown in FIG. 16, the UE determines for a single-TRP PDSCH (PDSCH #1) to apply the first TCI state (TCI state #1) of the indicated TCI states.

In the example shown in FIG. 16, the UE determines for multi-TRP PDSCHs (PDSCH #1-1 and PDSCH #1-2) to apply the first TCI state (TCI state #1) of the indicated TCI states to PDSCH #1-1 while applying the second TCI state (TCI state #2) of the indicated TCI states to PDSCH #1-2.

Note that, although a case where joint/(separate) DL TCI states are indicated for the UE has been described in FIG. 16 above, TCI states indicated for the UE may be (separate) UL TCI states.

According to the first embodiment above, configured/indicated TCI states can be appropriately applied to a channel(s)/signal(s) according to the number of TRPs.

### <Second Embodiment>

In a second embodiment, description will be given of derivation of an index (indices) related to a TRP(s) and application of an indicated TCI state(s).

The index related to a TRP may be a CORESET pool index, a panel index, a TCI state list/pool index, a TRP index, or the like, for example.

In the present disclosure, deriving/determining an index related to a TRP and selecting/determining a TCI state to be applied to a channel/signal corresponding to an index related to a TRP may be used interchangeably.

### <<Embodiment 2-1>>

Embodiment 2-1 may be applied to a case of using at least one of multi-DCI based multi-TRP and single-TRP, for example.

An index related to a TRP corresponding to a channel/signal may be derived from a specific CORESET/PDCCH.

The index related to a TRP may be configured/indicated for each channel/signal. The configuration/indication may be performed by using higher layer signaling (RRC/MAC CE)/DCI. In the present disclosure, "for each channel/signal," "for each channel/signal configuration," "for each channel/signal resource," and "for each channel/signal resource set" may be used interchangeably.

The channel/signal may be at least one of a (scheduled) PDSCH/PUSCH and a (triggered) PUCCH/aperiodic (A)-SRS/A-CSI-RS, for example.

The index related to a TRP may be used to perform selection for configured/indicated TCI states.

The indicated TCI states may correspond to the respective indices of TRPs. For example, a first TCI state of the indicated TCI states may correspond to an index related to a first TRP. For example, a second TCI state of the indicated TCI states may correspond to an index related to a second TRP.

The specific CORESET/PDCCH may be a CORESET/PDCCH scheduling/triggering the channel.

A UE/base station may derive an index related to a TRP corresponding to a channel/signal from the specific CORESET/PDCCH.

When a channel/signal is scheduled/triggered by a CORESET/PDCCH related to an index related to a certain TRP, the UE may select/determine a TCI state to apply to the channel/signal from among multipleindicated TCI states, based on the index related to the TRP.

The UE may select/determine a TCI state to apply to the channel/signal from among multiple indicated TCI states, based on the index related to the TRP configured/indicated for the channel/signal.

An RRC parameter (for example, followUnifiedTCIstate) indicating following a common TCI state (indicated TCI state) may be associated with a configuration of a CORESET/PDCCH.

An RRC parameter (for example, followUnifiedTCIstate) indicating following a common TCI state need not be associated with a configuration of a CORESET/PDCCH. In this case, the UE may select/determine a TCI state of the channel/signal scheduled/triggered by the CORESET/PDCCH from among indicated TCI states, based on an index related to a TRP. In this case, the UE may ignore a TCI state associated with the configuration of the CORESET/PDCCH.

An RRC parameter (for example, followUnifiedTCIstate) indicating following a common TCI state need not be associated with a configuration of a CORESET/PDCCH. In this case, the UE may apply a TCI state associated with the configuration of the CORESET/PDCCH to the channel/signal scheduled/triggered by the CORESET/PDCCH.

Note that, in the present disclosure, an RRC parameter (for example, followUnifiedTCIstate) indicating following a common TCI state being not associated with a configuration of a CORESET/PDCCH and not sharing an indicated TCI state (common TCI state) may be used interchangeably.

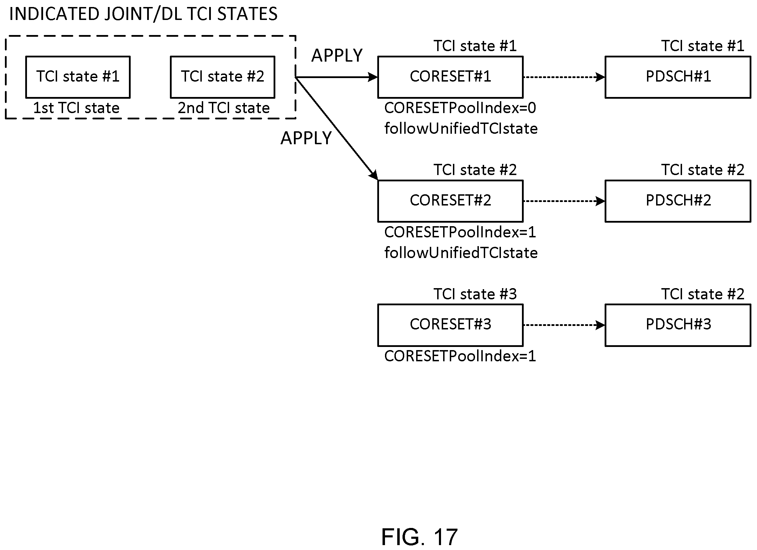

FIG. 17 is a diagram to show an example of selection/application of TCI states according to embodiment 2-1. In the example shown in FIG. 17, for a UE, two TCI states (here, as joint/(separate) DL TCI states, TCI state #1 and TCI state #2) are indicated. Here, a first TCI state is TCI state #1, and a second TCI state is TCI state #2.

In the example shown in FIG. 17, CORESETs #1 to #3 are configured for a UE. TCI state #1, CORESET pool index = 0, and an RRC parameter indicating following a common TCI state (followUnifiedTCIstate) are associated with the configuration of CORESET #1. TCI state #2, CORESET pool index = 1, and an RRC parameter indicating following a common TCI state (followUnifiedTCIstate) are associated with the configuration of CORESET #2. TCI state #3 and CORESET pool index = 1 are associated, while an RRC parameter indicating following a common TCI state (followUnifiedTCIstate) is not associated, with the configuration of CORESET #3.

In the example shown in FIG. 17, the UE determines an index related to a TRP (CORESET pool index/TRP index) to be 0 (= 0) for PDSCH #1 related to CORESET #1, based on the CORESET pool index associated with CORESET #1. The UE determines to apply the first TCI state (TCI state #1) of the indicated TCI states to PDSCH #1 associated with CORESET #1, based on the CORESET pool index associated with CORESET #1.

In the example shown in FIG. 17, the UE determines an index related to a TRP (CORESET pool index/TRP index) to be 1 (= 1) for PDSCH #2 related to CORESET #2, based on the CORESET pool index associated with CORESET #2. The UE determines to apply the second TCI state (TCI state #2) of the indicated TCI states to PDSCH #2 associated with CORESET #2, based on the CORESET pool index associated with CORESET #2.

In the example shown in FIG. 17, the UE determines an index related to a TRP (CORESET pool index/TRP index) to be 1 (= 1) for PDSCH #3 related to CORESET #3, based on the CORESET pool index associated with CORESET #3. The UE determines to apply the second TCI state (TCI state #2) of the indicated TCI states to PDSCH #3 associated with CORESET #3, based on the CORESET pool index associated with CORESET #3.

Note that, although a case where joint/(separate) DL TCI states are indicated for the UE has been described with FIG. 17 above, TCI states indicated for the UE may be (separate) UL TCI states. Although an example of applying TCI state #2 to PDSCH #3 is shown in FIG. 17, TCI state #3 may be applied to PDSCH #3 as described above.

Note that, in the present disclosure, a configuration of a CORESET/PDCCH for which no index related to a TRP is configured may mean that an index related to a TRP of a first value (for example, 0 or 1) is configured. When no index related to a TRP is configured for a configuration of a CORESET/PDCCH, a UE may assume that the index related to the TRP of the first value (for example, 0 or 1) is associated with the CORESET/PDCCH.

In the present disclosure, for multi-DCI based multi-TRP, an index related to a TRP (for example, a CORESET pool index) may be configured for each CORESET. In the preset disclosure, for a single-DCI based single TRP, an index related to a TRP (for example, at least one of a TCI state list (pool/set) index, a first/second TCI state index, an index for differentiating each TRP, and a TRP index) may be configured for each CORESET configuration/PDCCH configuration.

According to embodiment 2-1, by using an index related to each TRP, a TCI state to be applied to each channel/signal can be appropriately determined.

### <<Embodiment 2-2>>

Embodiment 2-2 may be applied to a case of using at least one of single-DCI based multi-TRP and single-TRP, for example.

An index related to a TRP corresponding to a channel/signal may be derived from an index of a specific channel/signal.

The channel/signal may be at least one of a (scheduled) PDSCH/PUSCH and a (triggered) PUCCH/aperiodic (A)-SRS/A-CSI-RS, for example.

The index related to a TRP may be used to perform selection for configured/indicated TCI states.

The indicated TCI states may correspond to respective indices of the TRPs. For example, a first TCI state of the indicated TCI states may correspond to an index related to a first TRP. For example, a second TCI state of the indicated TCI states may correspond to an index related to a second TRP.

The channel/signal may be a scheduled/triggered PDSCH/PUSCH/PUCCH/A-SRS/A-CSI-RS, for example.

A UE/base station may derive the index related to the TRP corresponding to the channel/signal from (an index associated with) the specific channel/signal.

For at least one of multi-TRP PDSCHs (NCJT or repetition transmissions), multi-TRP PDCCH/PUCCH/PUSCH repetition transmissions, and M-TRP SRS/CSI-RSs, the UE may determine to apply the first TCI state of the indicated TCI states to a first PDSCH/PDCCH/PUCCH/PUSCH/SRS/CSI-RS (having a first index). In this case, the UE may determine to apply the second TCI state of the indicated TCI states to a second PDSCH/PDCCH/PUCCH/PUSCH/SRS/CSI-RS (having a second index).

An existing method (defined in Rel. 16 or previous versions) may be used for mapping/association of the first/second TCI state to/with each channel/signal.

An RRC parameter (for example, followUnifiedTCIstate) indicating following a common TCI state (indicated TCI state) may be associated with a configuration of a CORESET/PDCCH.

An RRC parameter (for example, followUnifiedTCIstate) indicating following a common TCI state need not be associated with a configuration of a CORESET/PDCCH. In this case, the UE may select/determine a TCI state of the channel/signal scheduled/triggered by the CORESET/PDCCH from among the indicated TCI states, based on the index related to a TRP. In this case, the UE may ignore a TCI state associated with the configuration of the CORESET/PDCCH.

An RRC parameter (for example, followUnifiedTCIstate) indicating following a common TCI state need not be associated with a configuration of a CORESET/PDCCH. In this case, the UE may apply a TCI state associated with the configuration of the CORESET/PDCCH to the channel/signal scheduled/triggered by the

### CORESET/PDCCH.

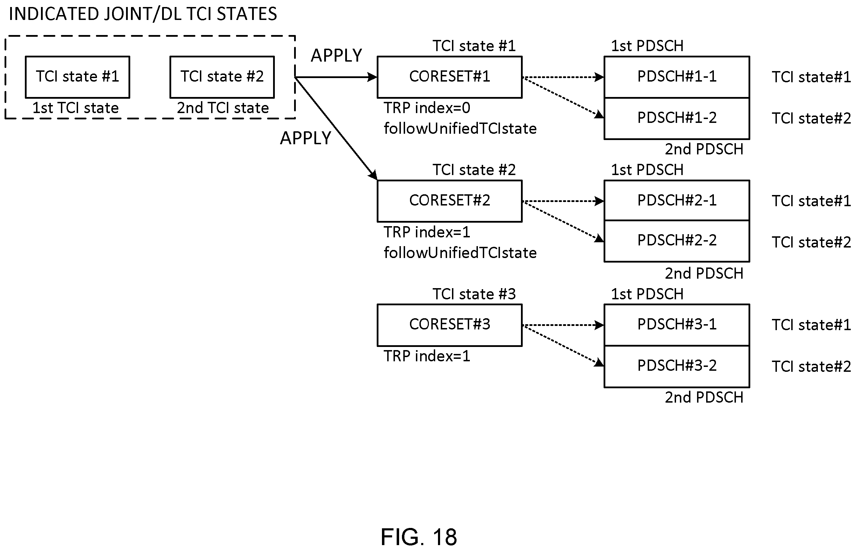

FIG. 18 is a diagram to show an example of selection/application of TCI states according to embodiment 2-2. In the example shown in FIG. 18, for a UE, two TCI states (here, as joint/(separate) DL TCI states, TCI state #1 and TCI state #2) are indicated. Here, a first TCI state is TCI state #1, and a second TCI state is TCI state #2.

In the example shown in FIG. 18, CORESETs #1 to #3 are configured for a UE. TCI state #1, index related to a TRP = 0, and an RRC parameter indicating following a common TCI state (followUnifiedTCIstate) are associated with the configuration of CORESET #1. TCI state #2, index related to a TRP = 1, and an RRC parameter indicating following a common TCI state (followUnifiedTCIstate) are associated with the configuration of CORESET #2. TCI state #3 and index related to a TRP = 1 are associated, while an RRC parameter indicating following a common TCI state (followUnifiedTCIstate) is not associated, with the configuration of CORESET #3.

In the example shown in FIG. 18, (a PDCCH related to) CORESET #1 schedules PDSCH #1-1 and PDSCH #1-2, (a PDCCH related to) CORESET #2 schedules PDSCH #2-1 and PDSCH #2-2, and (a PDCCH related to) CORESET #3 schedules PDSCH #3-1 and PDSCH #3-2.

In the example shown in FIG. 18, the UE selects any one of TCI states for the PDSCH scheduled by each CORESET, from among indicated TCI states, based on the index of the PDSCH.

In the example shown in FIG. 18, the UE determines for PDSCH #1-1, PDSCH #2-1, and PDSCH #3-1 to apply the first TCI state (TCI state #1) of the indicated TCI states. The UE also determines for PDSCH #1-2, PDSCH #2-2, and PDSCH #3-2 to apply the second TCI state (TCI state #2) of the indicated TCI states.

Note that, although a case where joint/(separate) DL TCI states are indicated for the UE has been described with FIG. 18 above, TCI states indicated for the UE may be (separate) UL TCI states. Although an example of applying TCI state #2 to PDSCH #3 is shown in FIG. 18, TCI state #3 may be applied to PDSCH #3 as described above.

Note that, for a case of performing repetition transmission, mapping of a TCI state to an n-th repetition may be sequential mapping or cyclic mapping. For example, in the sequential mapping, the first TCI state may be mapped to the first and second repetitions (transmissions), and the second TCI state may be mapped to the third and fourth repetitions (transmissions). For example, in the cyclic mapping, the first TCI state may be mapped to the first and third repetitions (transmissions), and the second TCI state may be mapped to the second and fourth repetitions (transmissions).

When a single-TRP PDSCH/PDCCH/PUCCH/PUSCH/SRS-CSI-RS is scheduled/triggered, the UE may determine a TCI state to apply to each channel/signal in accordance with a specific rule.

For example, the UE may determine to (always) apply the first (or second) TCI state of the indicated TCI states to each channel.

For example, the UE may be configured with which one of the first TCI state and the second TCI state of the indicated TCI states to apply. The configuration may be performed by using higher layer signaling (RRC/MAC CE).

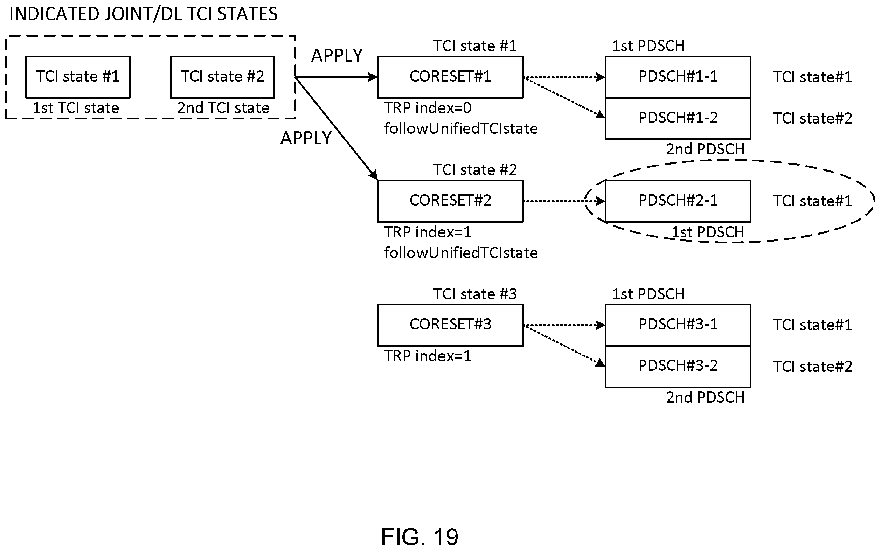

FIG. 19 is a diagram to show another example of the selection/application of TCI states according to embodiment 2-2. In the example shown in FIG. 19, for a UE, two TCI states (here, as joint/(separate) DL TCI states, TCI state #1 and TCI state #2) are indicated. Here, a first TCI state is TCI state #1, and a second TCI state is TCI state #2.

In the example shown in FIG. 19, the configuration of each CORESET is similar to that in FIG. 18 described above. Only differences from FIG. 18 will be described below.

In the example shown in FIG. 19, (a PDSCH related to) CORESET #2 schedules PDSCH #2-1. PDSCH #2-1 is a single-TRP PDSCH.

In this case, the UE determines to apply the first TCI state (TCI state #1) of the indicated TCI states to PDSCH #2-1.

Note that, although a case where joint/(separate) DL TCI states are indicated for the UE has been described with FIG. 19 above, TCI states indicated for the UE may be (separate) UL TCI states. Although an example of applying TCI state #2 to PDSCH #3 is shown in FIG. 19, TCI state #3 may be applied to PDSCH #3 as described above.

According to embodiment 2-2, by using an index of each channel/signal, a TCI state to be applied to each channel/signal can be appropriately determined.

### <<Variations of Embodiment 2-1/2-2>>

For each channel/signal (for example, at least one of a scheduled PDSCH/PUSCH and a triggered PUCCH/A-CSI-RS/A-SRS), a DCI field indicating at least one of a single TRP or multi-TRP and an order of indicated TCI states may be defined.

Alternatively, for each channel/signal, at least one of a DCI field indicating a single TRP or multi-TRP and a DCI field indicating an order of indicated TCI states may be defined.

The DCI field may be included in specific DCI. For example, the specific DCI may be DCI for scheduling a PDSCH/PUSCH (for example, DCI format 0_0/0_1/0_2/1_0/1_1/1_2).

The DCI field may be of a specific number of bits.

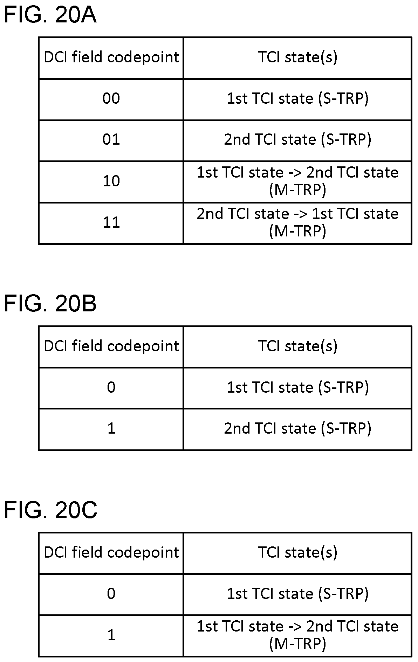

For example, the specific DCI field may be of two bits (see FIG. 20A). In the example shown in FIG. 20A, a correspondence relationship between codepoints of the DCI field and indications of a TCI state(s) is shown.

In the example shown in FIG. 20A, when a codepoint of the DCI field indicates "00," this indicates that a channel/signal related to the DCI is single-TRP transmission and also a first TCI state is to be applied. When a codepoint of the DCI field indicates "01," this indicates that a channel/signal related to the DCI is single-TRP transmission and also a second TCI state is to be applied.

When a codepoint of the DCI field indicates "10," this indicates that a channel/signal related to the DCI is multi-TRP transmission and also TCI states are to be applied in the order of the first TCI state and the second TCI state to the channels/signals in ascending order of indices of the channels/signals. When a codepoint of the DCI field indicates "11," this indicates that a channel/signal related to the DCI is multi-TRP transmission and also the TCI states are to be applied in the order of the second TCI state and the first TCI state to the channels/signals in ascending order of the indices of the channels/signals.

For example, the specific DCI field may be of one bit (see FIG. 20B and FIG. 20C). In the example shown in FIG. 20B, a correspondence relationship between codepoints of the DCI field and indications of a TCI state for a single TRP is shown. In the example shown in FIG. 20C, a correspondence relationship between codepoints of the DCI field and indications of a TCI state(s) for a single TRP and multi-TRP is shown.

In the example shown in FIG. 20B, when a codepoint of the DCI field indicates "0," this indicates that a channel/signal related to the DCI is single-TRP transmission and also a first TCI state is to be applied. When a codepoint of the DCI field indicates "1," this indicates that a channel/signal related to the DCI is single-TRP transmission and also a second TCI state is to be applied.

In the example shown in FIG. 20C, when a codepoint of the DCI field indicates "0," this indicates that a channel/signal related to the DCI is single-TRP transmission and also a first TCI state is to be applied. When a codepoint of the DCI field indicates "1," this indicates that a channel/signal related to the DCI is multi-TRP transmission and also the first TCI state and the second TCI state are to be applied in ascending order of indices of channels/signals.

Note that, in FIG. 20A to FIG. 20C above, "first" and "second" may be used interchangeably. The number of bits of the DCI field and the correspondences of DCI codepoints and indications related to a TCI state(s) above are merely examples, and these are not restrictive.

The number of bits of the DCI field may be configured for a UE by using higher layer signaling (RRC/MAC CE). The configuration may be performed in common for DCI for DL and DCI for UL or may be performed separately for DCI for DL and DCI for UL. The number of bits of the DCI field may be a fixed value defined in a specification in advance.

The DCI field may be used for transmission/reception of a PUCCH (for example, an HARQ-ACK)/A-CSI-RS/A-SRS.

The DCI field may be included only in single DCI, may be included in only in multi-DCI, or may be included in both single DCI and multi-DCI.

The DCI field may be a new DCI field defined in Rel. 18 or later versions. A specific field defined in Rel. 17 or previous versions may be used for the DCI field. The specific field may be a field for multi-TRP PUSCH repetitions.

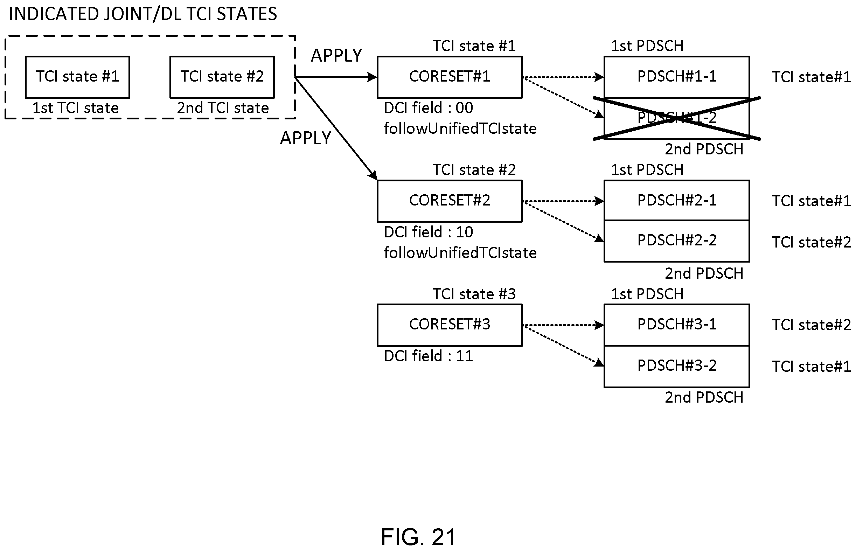

FIG. 21 is a diagram to show an example of selection/application of TCI states according to the variations of embodiment 2-1/2-2. The indications of a TCI state(s), the configuration of each CORESET, and schedule of PDSCHs in the example shown in FIG. 21 are similar to those in FIG. 18 described above.

In the example shown in FIG. 21, the above-described DCI field is included in DCI (related DCI) transmitted on a PDCCH in each CORESET. The DCI field indicates a codepoint included in any of the correspondence relationships shown in FIG. 20 above.

In the example shown in FIG. 21, the DCI field included in DCI related to CORESET #1 indicates a codepoint "00." The DCI field included in DCI related to CORESET #2 indicates a codepoint "10." The DCI field included in DCI related to CORESET #3 indicates a codepoint "11."

In the example shown in FIG. 21, (PDCCHs related to) CORESET #1 schedules PDSCH #1-1 and PDSCH #1-2, (PDCCHs related to) CORESET #2 schedules PDSCH #2-1 and PDSCH #2-2, and (PDCCHs related to) CORESET #3 schedules PDSCH #3-1 and PDSCH #3-2.

In the example shown in FIG. 21, the UE selects any one TCI state of the indicated TCI states for each of the PDSCHs scheduled by each CORESET, based on (the codepoint of) the DCI field.

For example, since the codepoint of the DCI field corresponding to CORESET #1 is "00," the UE applies a first TCI state (TCI state #1) to PDSCH #1-1. In this case, the PDSCH corresponding to CORESET #1 is a single-TRP PDSCH, the UE does not perform reception of PDSCH #1-2.

Since the codepoint of the DCI field corresponding to CORESET #2 is "10," the UE applies the first TCI state (TCI state #1) to PDSCH #2-1 while applying a second TCI state (TCI state #2) to PDSCH #2-2.

Since the codepoint of the DCI field corresponding to CORESET #3 is "11," the UE applies the second TCI state (TCI state #2) to PDSCH #3-1 while applying the first TCI state (TCI state #1) to PDSCH #3-2.

Note that, although a case where joint/(separate) DL TCI states are indicated for the UE has been described with FIG. 21 above, TCI states indicated for the UE may be (separate) UL TCI states. Although an example of applying TCI state #2 to PDSCH #3 is shown in FIG. 21, TCI state #3 may be applied to PDSCH #3 as described above.

### <<Embodiment 2-3>>

Embodiment 2-3 may be applied to a case of using at least one of single-DCI based multi-TRP and single TRP, for example.

An index related to a TRP corresponding to a channel/signal may be derived from an index of a specific channel/signal and a specific CORESET/PDSCH.

The channel/signal may be at least one of a (scheduled) PDSCH/PUSCH and a (triggered) PUCCH/aperiodic (A)-SRS/A-CSI-RS, for example.

The index related to a TRP may be used to perform selection for configured/indicated TCI states.

The indicated TCI states may correspond to respective indices of the TRPs. For example, a first TCI state of the indicated TCI states may correspond to an index related to a first TRP. For example, a second TCI state of the indicated TCI states may correspond to an index related to a second TRP.

The channel/signal may be a scheduled/triggered PDSCH/PUSCH/PUCCH/A-SRS/A-CSI-RS, for example.

The specific CORESET/PDCCH may be a CORESET/PDCCH scheduling/triggering the channel.

A UE/base station may derive the index related to the TRP corresponding to the channel/signal from (an index associated with) the specific channel/signal and the specific CORESET/PDCCH.

For at least one of multi-TRP PDSCHs (NCJT or repetition transmissions), multi-TRP PDCCH/PUCCH/PUSCH repetition transmissions, and M-TRP SRSs/CSI-RSs, if a scheduling CORESET corresponds to an index related to a TRP of a first value (for example, TRP index = 0), the UE may determine to apply the first TCI state of the indicated TCI states to a first PDSCH/PDCCH/PUCCH/PUSCH/SRS/CSI-RS (having a first index). In this case, the UE may determine to apply the second TCI state of the indicated TCI states to a second PDSCH/PDCCH/PUCCH/PUSCH/SRS/CSI-RS (having a second index).

For at least one of multi-TRP PDSCHs (NCJT or repetition transmissions), multi-TRP PDCCH/PUCCH/PUSCH repetition transmissions, and M-TRP SRSs/CSI-RSs, if a scheduling CORESET corresponds to an index related to a TRP of a second value (for example, TRP index = 1), the UE may determine to apply the second TCI state of the indicated TCI states to the first PDSCH/PDCCH/PUCCH/PUSCH/SRS/CSI-RS (having a first index). In this case, the UE may determine to apply the first TCI state of the indicated TCI states to a second PDSCH/PDCCH/PUCCH/PUSCH/SRS/CSI-RS (having a second index).

A correspondence relationship between indices related to TRPs corresponding to a scheduling CORESET and an order of TCI states to be applied to each channel/signal may be defined/configured. The correspondence relationship may be defined in a specification in advance or may be configured/indicated for the UE by using higher layer signaling (RRC/MAC CE)/DCI.

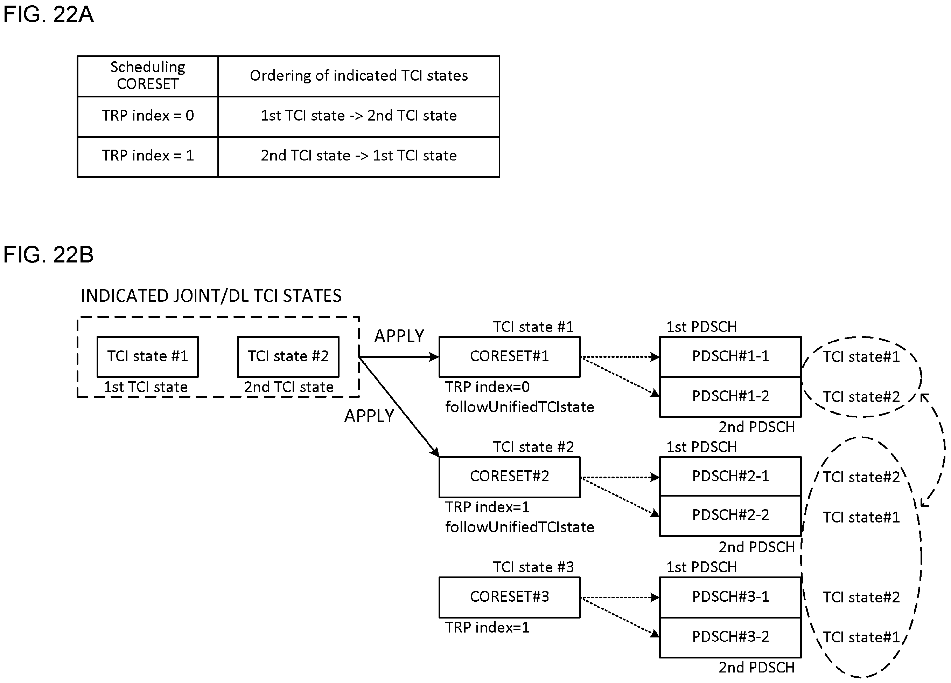

For example, a correspondence relationship as that shown in FIG. 22A may be defined/configured. In the example shown in FIG. 22A, when a scheduling CORESET corresponds to index related to a TRP = 0, the indicated TCI states are selected in the order of the first TCI state and the second TCI state in ascending order of indices of channels/signals.

In the example shown in FIG. 22A, when a scheduling CORESET corresponds to index related to a TRP = 1, the indicated TCI states are selected in the order of the second TCI state and the first TCI state in ascending order of indices of channels/signals.

In the correspondence relationship as that shown in FIG. 22A, "first" and "second" may be used interchangeably.

An existing method (defined in Rel. 16 or previous versions) may be used for mapping/association of the first/second TCI state to/with each channel/signal.

An RRC parameter (for example, followUnifiedTCIstate) indicating following a common TCI state may be associated with a configuration of a CORESET/PDCCH.

An RRC parameter (for example, followUnifiedTCIstate) indicating following a common TCI state need not be associated with a configuration of a CORESET/PDCCH. In this case, the UE may select/determine a TCI state of the channel/signal scheduled/triggered by the CORESET/PDCCH from among the indicated TCI states, based on the index related to a TRP. In this case, the UE may ignore a TCI state associated with the configuration of the CORESET/PDCCH.

An RRC parameter (for example, followUnifiedTCIstate) indicating following a common TCI state need not be associated with a configuration of a CORESET/PDCCH. In this case, the UE may apply a TCI state associated with the configuration of the CORESET/PDCCH to the channel/signal scheduled/triggered by the CORESET/PDCCH.

FIG. 22B is a diagram to show an example of selection/application of TCI states according to embodiment 2-3. In the example shown in FIG. 22B, the indicated TCI states, the configuration of each CORESET, and the scheduled PDSCHs are similar to those in FIG. 18 described above.

In the example shown in FIG. 22B, a UE selects any one TCI state of the indicated TCI states for the PDSCH scheduled by each CORESET, based on the index of the PDSCH and the index related to the TRP corresponding to the CORESET. In this case, the UE may follow a correspondence relationship as that shown in FIG. 22A described above.

In the example shown in FIG. 22B, the UE determines for PDSCH #1-1 and PDSCH #1-2 related to CORESET #1 to apply a first TCI state (TCI state #1) and a second TCI state (TCI state #2), respectively.

In the example shown in FIG. 22B, the UE determines for PDSCH #2-1 and PDSCH #2-2 related to CORESET #2 to apply the second TCI state (TCI state #2) and the first TCI state (TCI state #1), respectively.

In the example shown in FIG. 22B, the UE determines for PDSCH #3-1 and PDSCH #3-2 related to CORESET #3 to apply the second TCI state (TCI state #2) and the first TCI state (TCI state #1), respectively.

Note that, although a case where joint/(separate) DL TCI states are indicated for the UE has been described in FIG. 22B above, TCI states indicated for the UE may be (separate) UL TCI states. Although an example of applying TCI state #2 to PDSCH #3 is shown in FIG. 22B, TCI state #3 may be applied to PDSCH #3 as described above.

When a single-TRP PDSCH/PDCCH/PUCCH/PUSCH/SRS-CSI-RS is scheduled/triggered, the UE may determine a TCI state to apply to each channel/signal in accordance with a specific rule.

For example, the UE may determine to (always) apply, to each channel, a first (or second) TCI state determined based on a correspondence relationship between the index related to the TRP corresponding to a scheduling CORESET and an order of TCI states to be applied to channels/signals, among the indicated TCI states.

For example, the UE may be configured with which one of the first TCI state and the second TCI state of the indicated TCI states to apply. The configuration may be performed by using higher layer signaling (RRC/MAC CE).

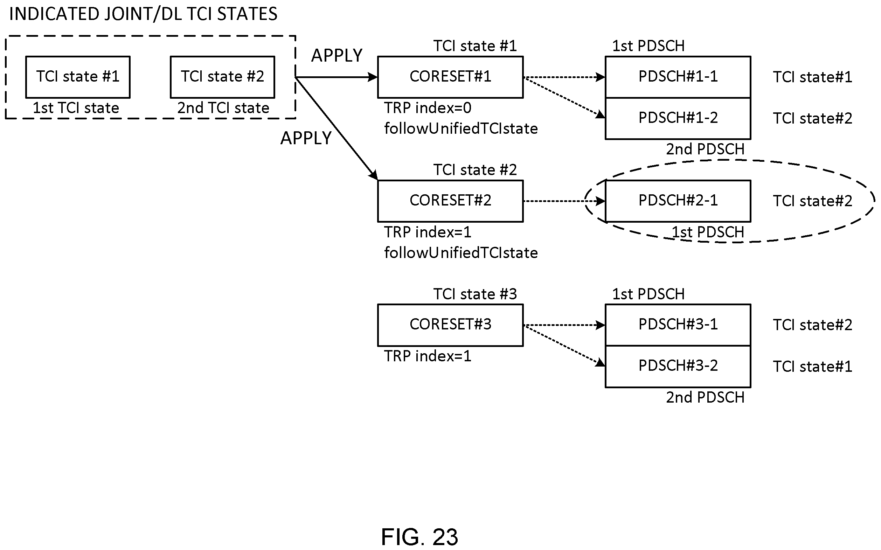

FIG. 23 is a diagram to show another example of the selection/application of TCI states according to embodiment 2-3. In the example shown in FIG. 23, for a UE, two TCI states (here, as joint/(separate) DL TCI states, TCI state #1 and TCI state #2) are indicated. Here, a first TCI state is TCI state #1, and a second TCI state is TCI state #2.

In the example shown in FIG. 23, the configuration of each CORESET and the schedule of PDSCHs are similar to those in FIG. 19 described above. Only differences from FIG. 19 will be described below.

In the example shown in FIG. 23, (a PDSCH related to) CORESET #2 schedules PDSCH #2-1. PDSCH #2-1 is a single-TRP PDSCH.

In this case, the UE determines to apply a first TCI state (TCI state #2) of the indicated TCI states to PDSCH #2-1. Here, the first TCI state is determined based on a correspondence relationship as that defined in FIG. 22A described above.

According to embodiment 2-3, by using an index related to each TRP and an index of each channel/signal, a TCI state to be applied to each channel/signal can be appropriately determined.

### <Third Embodiment>

In a third embodiment, description will be given of a TCI state list.

The TCI state list may include at least one of a TRP-specific (TRP specific) TCI state list and a TRP-common (TRP common) TCI state list.

The TRP-specific TCI state list may be a TCI state list configured for each TRP. The TRP-common TCI state list may be a TCI state list common to multiple TRPs.

The TRP-common TCI state list may be used/configured in a case of using multi-DCI. The TRP-specific TCI state list may be used/configured in a case of using single DCI.

Alternatively, the TRP-specific TCI state list may be used/configured in a case of using single DCI. The TRP-common TCI state list may be used/configured in a case of using multi-DCI.

### <<Embodiment 3-1>>

When a TRP-common TCI state list is used for multi-DCI, one set of TCI state lists may be configured for a UE for each BWP/CC by using RRC signaling.

Subsequently, a set of active TCI states corresponding to CORESET pool indices (for example, 0 and 1) may be activated for the UE by using a MAC CE.

In this case, by an indication field in one MAC CE, an ID of an active TCI state for one (any one) CORESET pool index may be indicated. The indication field may correspond to one (any one) CORESET pool index.

Alternatively, in this case, by an indication field in one MAC CE, a set of active TCI states corresponding to any/all (both) of the CORESET pool indices may be indicated. The set of active TCI states may be one or may be more than one (for example, two at maximum).

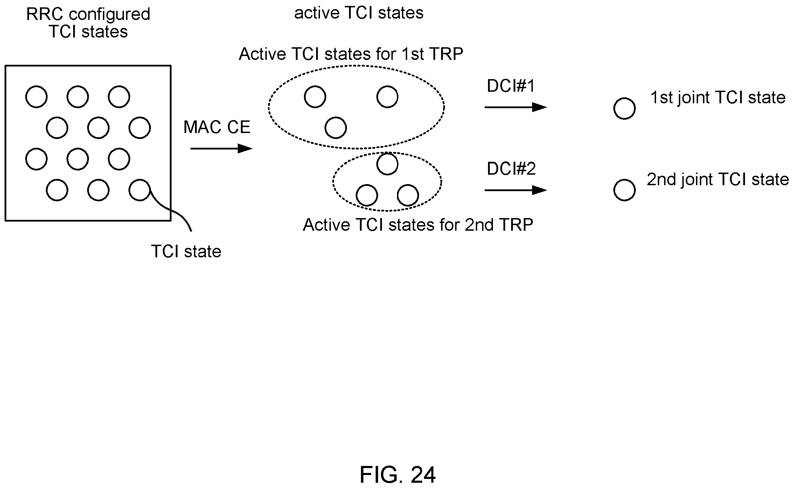

FIG. 24 is a diagram to show an example of a TCI state list according to embodiment 3-1. In the example shown in FIG. 24, a TRP-common TCI state list and transmission/reception by multi-DCI (DCI #1 and DCI #2) are configured for a UE. Note that, although a case of joint TCI states is shown in FIG. 24, this embodiment is also applicable to a case of separate TCI states.

In the example shown in FIG. 24, (a set of) active TCI states corresponding to each TRP are activated for a UE from the TCI state list by using a MAC CE. Subsequently, the UE is indicated with a TCI state from the set corresponding to each TRP by using each DCI.

### <<Embodiment 3-2>>

When a TRP-specific TCI state list is used for single DCI, multiple (for example, two) sets of TCI state lists may be configured for a UE for each BWP/CC by using RRC signaling.

Subsequently, a set of one or multiple (for example, two) active TCI states corresponding to each of indices (for example, 0 and 1) related to TRPs may be activated for the UE by using a MAC CE.

In this case, by an indication field in one MAC CE, an ID(s) of an active TCI state(s) for the index related to one (any one) TRP (TCI state list index) may be indicated. The indication field may correspond to the index of one (any one) TRP (TCI state list index). In this case, for multiple TRPs, active TCI states may be indicated by MAC CEs the number of which corresponds to the number of TRPs, for the UE.

Alternatively, in this case, by an indication field in one MAC CE, a set of active TCI states corresponding to any/all (both) of the CORESET pool indices may be indicated. The set of active TCI states may be one or may be more than one (for example, two at maximum).

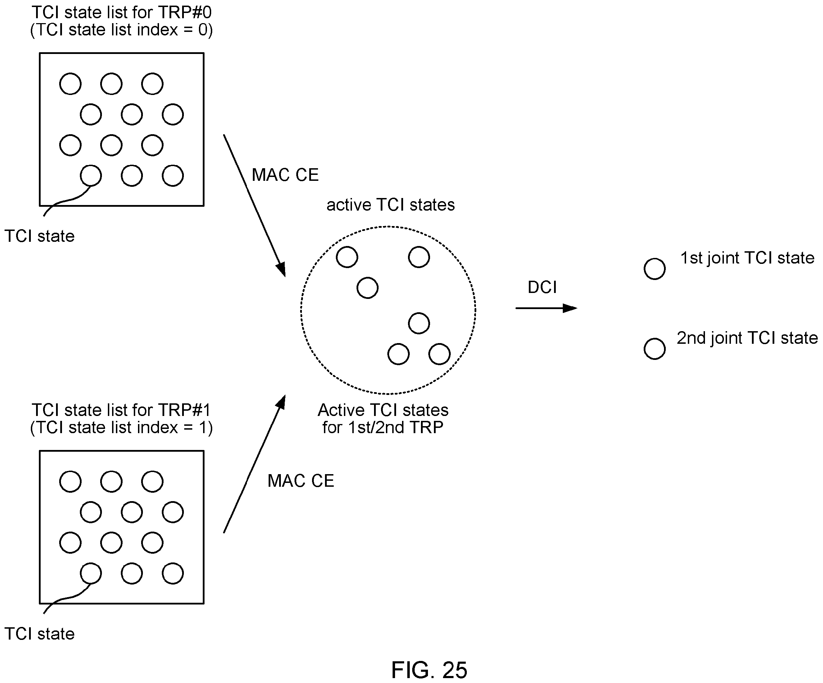

FIG. 25 is a diagram to show an example of TCI state lists according to embodiment 3-2. In the example shown in FIG. 25, TRP-specific TCI state lists (TCI state list for TRP #0 and TCI state list for TRP #1) and transmission/reception by single DCI are configured for a UE. Note that, although a case of joint TCI states is shown in FIG. 25, this embodiment is also applicable to a case of separate TCI states.

In the example shown in FIG. 25, (a set of) active TCI states corresponding to each TRP are activated for the UE from the TCI state list by using a MAC CE. These active TCI states may include at least one of a TCI state in the TCI state list for TRP #0 and a TCI state in the TCI state for TRP #1. Subsequently, the UE is indicated with one or multiple TCI states from the set corresponding to each TRP by using DCI.

Note that the MAC CEs that activate the TCI states shown in FIG. 25 may be separate MAC CEs or may be one (common) MAC CE.

### <<Embodiment 3-3>>

The (maximum) number of (for example, X) TCI states included in a TCI state list may be defined for each TRP.

This X may be 128, for example. This X may be a number larger than 128, for example.

The TRP-specific TCI state list may include X TCI state IDs for each TRP. To indicate an active TCI state from the TRP-specific TCI state list, the bit length of a TCI state ID field included in a MAC CE may be log₂X bits (when X = 128, 7 bits).

The TRP-common TCI state list may include (Y × X) TCI state IDs for each TRP. This Y may denote the number of TRPs (for example, two). To indicate an active TCI state from the TRP-common TCI state list, the bit length of a TCI state ID field included in a MAC CE may be log₂(Y × X) bits (when X = 128 and Y = 2, 8 bits).

Hence, in comparison to a TRP-common TCI state list, a TRP-specific TCI state list requires a smaller number of bits for fields in a MAC CE, which can reduce the overhead of the MAC CE.

A MAC CE for PDSCH TCI states for single-DCI multi-TRP defined in an existing specification (Rel. 16) includes, in the same octet as that for a first TCI state ID field ("TCI state ID_{N,1}" field (N is an integer)), a field indicating whether or not the next octet is present (C_{N} field) is included. This C_{N} field contributes to overhead reduction of the MAC CE, but this field can be present in the MAC CE since the TCI state ID field is of 7 bits.

Hence, maintaining the number of TCI state IDs in the TRP-specific TCI state list within a number (that is, 128) that can be indicated using 7 bits is effective for reduction of the overhead of the MAC CE.

The (maximum) number of (for example, Z) TCI states included in a TCI state list may be defined for all TRPs in total. This Z may be 128, for example.

As described, when the maximum number of TCI states is 128 for all the TRPs in total, the TCI state IDs included in the MAC CE can be expressed with 7 bits.

A TCI state ID for a first TCI state may be derived/determined from a TCI state list for a first TRP. A TCI state ID for a second TCI state may be derived/determined from a TCI state list for a second TRP.

When only one TCI state list is configured for a UE for each BWP/CC, TCI state IDs for the first TCI state and the second TCI state may be derived/determined from the one TCI state list.

A MAC CE that activates a TCI state(s) will be described below. The MAC CE in each embodiment of the present disclosure may be at least one of MAC CEs to be described below.

In the following, the MAC CE that activates a TCI state(s) may be a MAC CE that activates joint/separate TCI states with N > 1 and M > 1.

In the following, cases where X = 2 and Y = 2 will be mainly described, but the values of N and M may each be two or more.

### {Option 1}

When separate TCI states with N = 2 and M = 2 are configured/enabled by using RRC signaling, a MAC CE obtained by enhancing the MAC CE shown in FIG. 8 described above (Enhanced TCI states Activation/Deactivation for UE-specific PDSCH MAC CE) may be used.

The MAC CE may include a field indicating a UL TCI state or a DL TCI state (link direction). The field may be defined at a position of a reserved bit in a first octet of the MAC CE before enhancement.

When the MAC CE is applied for separate TCI states with N = 2 and M = 2, a UE may ignore a first field (Cᵢ) included in the MAC CE as a reserved bit. In this way, two common TCI states can be dynamically indicated/changed by using DCI.

When the MAC CE is applied for separate TCI states with N = 2 and M = 2, the UE may determine to maintain the first field (Cᵢ) included in the MAC CE indicating whether or not a second TCI state ID field is present. In this way, one or two common TCI states can be dynamically indicated/changed by using DCI.

The UE may receive separate MAC CEs to indicate/change/update each of the DL TCI state and the UL TCI state.

One DCI (for example, DCI format 1_1/1_2) may include two respective specific fields indicating a DL common TCI state and a UL common TCI state.

Alternatively, DCI for scheduling a DL channel (for example, DCI format 1_1/1_2) may include a field indicating each DL common TCI state, and DCI for scheduling a UL channel (for example, DCI format 0_1/0_2) may include a field indicating each UL common TCI state.

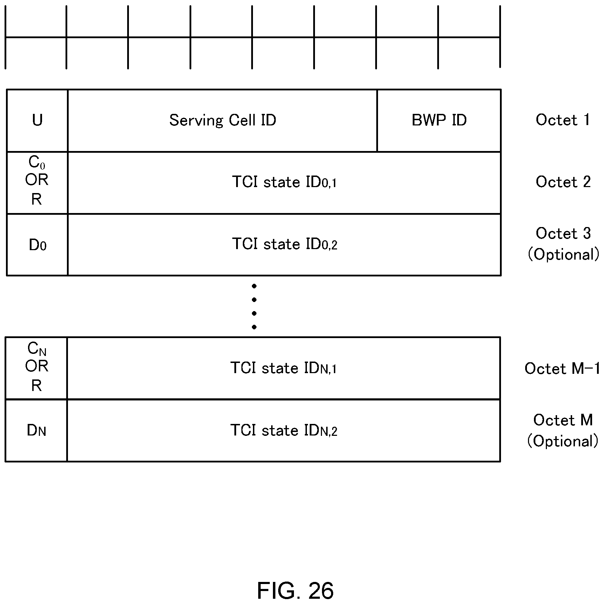

FIG. 26 is a diagram to show an example of a configuration of a MAC CE according to option 1. FIG. 26 is a MAC CE obtained by enhancing the MAC CE shown in FIG. 8.

A third MAC CE shown in FIG. 26 includes a field indicating a UL TCI state or a DL TCI state (shown with "U"). The field may be defined at a position of a reserved bit in a first octet of the MAC CE before enhancement.

### {Option 2}

When TCI states with N = 2 and M = 2 (N = M = 2) are configured/enabled by using RRC signaling, a specific MAC CE may be used to activate a TCI state(s).

### {{Option 2-1}}

The specific MAC CE may include one or more fields each indicating any of a DL TCI state only, a UL TCI state only, and DL and UL TCI states.

The one or more fields may each correspond to a specific codepoint of a TCI field included in DCI.

The field(s) (which may be described as Cᵢ below) may each have a specific number of bits (for example, 2 bits).

The field (Cᵢ) may correspond to a TCI state ID field(s) ("TCI state ID_{i,j}"). The TCI state ID field(s) ("TCI state ID_{i,j}") may include a first TCI state ID field ("TCI state ID_{i,1}"), a second TCI state ID field ("TCI state ID_{i,2}"), a third TCI state ID field ("TCI state ID_{i,3}"), and a second TCI state ID field ("TCI state ID_{i,4}").

Note that, in the present disclosure, the i above may be a number expressed in the decimal system. A number obtained by expressing the i above in the binary system may correspond to the number of TCI codepoints.

A UE may determine, based on a specific field (for example, Cᵢ) included in a MAC CE, whether DL TCI states and UL TCI states are included, only DL TCI states are included, only UL TCI states are included, or no TCI state ID is included in the MAC CE, for an (i + 1)-th codepoint in a TCI field included in DCI.

When the specific field (for example, Cᵢ) indicates that no TCI state ID is included in the MAC CE (for example, a first value (for example, "00")) for the (i + 1)-th codepoint in the TCI field included in the DCI, no corresponding TCI state ID field may be included in the MAC CE.

When the specific field (for example, Cᵢ) indicates that only DL TCI states are included in the MAC CE (for example, a second value (for example, "01")) for the (i + 1)-th codepoint in the TCI field included in the DCI, two DL TCI state ID fields may be included in the MAC CE.

When the specific field (for example, Cᵢ) indicates that only UL TCI states are included in the MAC CE (for example, a third value (for example, "10")) for the (i + 1)-th codepoint in the TCI field included in the DCI, two UL TCI state ID fields may be included in the MAC CE.

When the specific field (for example, Cᵢ) indicates that DL TCI states and UL TCI states are included in the MAC CE (for example, a fourth value (for example, "11")) for the (i + 1)-th codepoint in the TCI field included in the DCI, two DL TCI state ID fields and two UL TCI state ID fields may be included in the MAC CE.

In option 2-1, the number of DL TCI states (IDs)/UL TCI states (IDs) corresponding to i may be a fixed value (for example, two) .

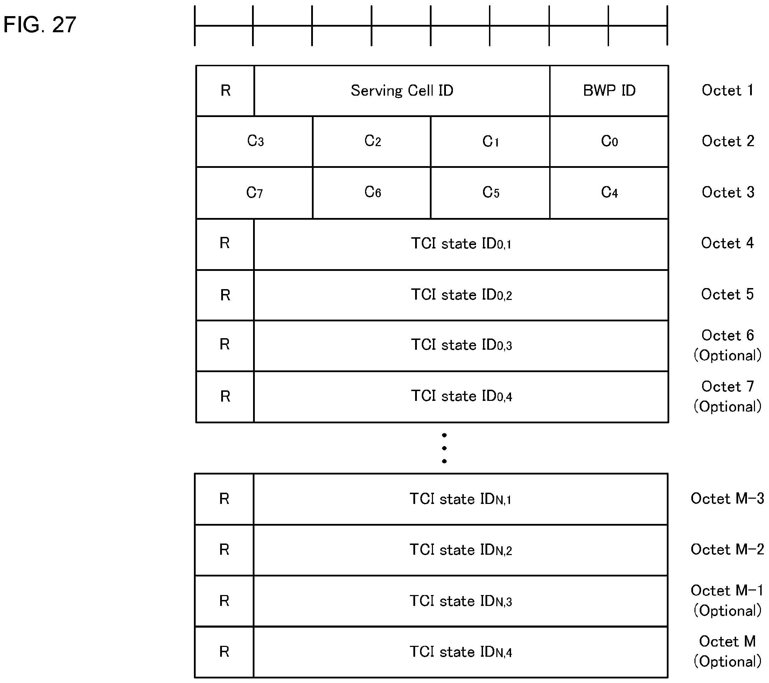

FIG. 27 is a diagram to show an example of a configuration of a MAC CE according to option 2-1.

In FIG. 27, when Cᵢ indicates a first value (for example, "00"), a UE determines that no corresponding TCI state ID field is included in the MAC CE.

In FIG. 27, when Cᵢ indicates a second value (for example, "01"), the UE determines that two corresponding DL TCI state ID fields are included in the MAC CE.

In FIG. 27, when Cᵢ indicates a third value (for example, "10"), the UE determines that two corresponding UL TCI state ID fields are included in the MAC CE.

In FIG. 27, when Cᵢ indicates a fourth value (for example, "11"), the UE determines that two corresponding DL TCI state ID fields and two corresponding UL TCI state ID fields are included in the MAC CE.

In the MAC CE that activates TCI states, octets for first and second TCI state ID fields with i = 0 may always be present, while subsequent octets from an octet for a third TCI state ID field with i = 0 (octets from octet 6 in the example in FIG. 27) may each be present based on a corresponding Cᵢ value.

### {{Option 2-2}}

The specific MAC CE may include one or more first fields and one or more second fields each including any of DL TCI states only, UL TCI states only, and DL and UL TCI states.

The first field(s) and the second field(s) may each correspond to a specific codepoint of a TCI field included in DCI.

The first field(s) (which may be described as Cᵢ below) and the second field(s) (which may be described as Dᵢ below) may each have a specific number of bits (for example, 1 bits).

A UE may determine, based on the first field (for example, Cᵢ) and the second field (for example, Dᵢ) included in a MAC CE, whether DL TCI states and UL TCI states are included, only DL TCI states are included, only UL TCI states are included, or no TCI state ID is included in the MAC CE, for an (i + 1)-th codepoint in a TCI field included in DCI.

For example, the UE may determine, based on the first field (for example, Cᵢ), whether corresponding DL TCI states and corresponding UL TCI states are included or only DL TCI states/UL TCI states are included in the MAC CE.

For example, the first field (Cᵢ) may be of 1 bit and correspond to the (i + 1)-th codepoint in the TCI field included in the DCI.

When the field (Cᵢ) indicates a first value (for example, "0"), the UE may determine that TCI state ID fields corresponding to only DL TCI states or only UL TCI states are present in the MAC CE.

When the field (Cᵢ) indicates a second value (for example, "1"), the UE may determine that TCI state ID fields corresponding to DL TCI states and UL TCI states are present in the MAC CE.

For example, when the UE determines that only DL/UL TCI states are included, the UE may determine, based on the second field (for example, Dᵢ), whether corresponding TCI state IDs included in the MAC CE correspond to DL or UL TCI states.

### {{Option 2-3}}

A MAC CE used in option 2-1 may include a field indicating the number of corresponding DL/UL TCI states (IDs).

The field may be included in the same octet as that of a field indicating a first (or second) TCI state ("TCI state ID_{N,1}") (or "TCI state ID_{N,2}") of a codepoint of any TCI field. For example, the field may be defined at a position of a reserved bit of the MAC CE used in option 2-1.

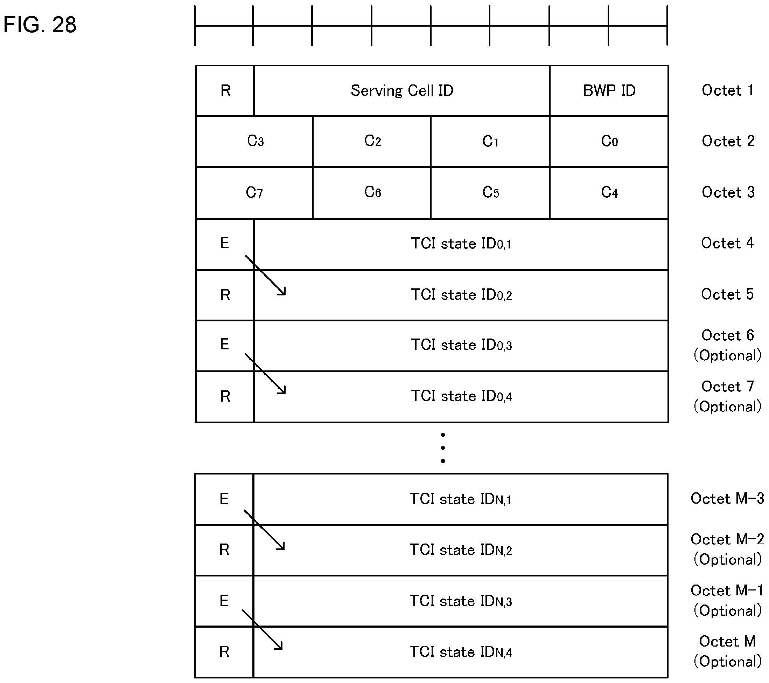

FIG. 28 is a diagram to show an example of a configuration of a MAC CE according to option 2-3.

In FIG. 28, when Cᵢ indicates a first value (for example, "00"), a UE determines that no corresponding TCI state ID field is included in the MAC CE.

In FIG. 28, when Cᵢ indicates a second value (for example, "01"), the UE determines that corresponding DL TCI state ID fields are included in the MAC CE.

In FIG. 28, when Cᵢ indicates a third value (for example, "10"), the UE determines that corresponding UL TCI state ID fields are included in the MAC CE.

In FIG. 28, when Cᵢ indicates a fourth value (for example, "11"), the UE determines that corresponding DL TCI state ID fields and corresponding UL TCI state ID fields are included in the MAC CE.

In FIG. 28, a field indicating the number of corresponding DL/UL TCI states (IDs) (described as "E" below) is included. The field indicates the number of corresponding TCI state ID fields. In other words, the field indicates whether any corresponding TCI state ID field is present in the octet subsequent to the octet of this field.

For example, when E indicates a first value (for example, "0"), the UE may determine that the number of corresponding TCI states (IDs) corresponding to this E is one. For example, when E indicates a second value (for example, "1"), the UE may determine that the number of corresponding TCI states (IDs) corresponding to this E is two.

### {{Option 2-4}}

The specific MAC CE above may include fields (E) each indicating whether or not the next octet is present.

The specific MAC CE may include one or more fields each indicating whether or not a first octet (first TCI state ID field ("TCI state ID_{i,1}") corresponding to each TCI codepoint) is present.

The field(s) (which may be described as Cᵢ below) may have a specific number of bits (for example, 1 bits). For example, when the value of the field (Cᵢ) indicates a first value (for example, 0), the TCI state ID field with the smallest j corresponding to the field (Cᵢ) ("TCI state ID_{i,j}") may be TCI state ID_{i,1}. For example, when the value of the field (Cᵢ) indicates a second value (for example, 0), the TCI state ID field with the smallest j corresponding to the field (Cᵢ) ("TCI state ID_{i,j}") may be TCI state ID_{i,2}.

The field (Cᵢ) may correspond to a TCI state ID field(s) ("TCI state ID_{i,j}"). The TCI state ID field(s) ("TCI state ID_{i,j}") may include a first TCI state ID field ("TCI state ID_{i,1}"), a second TCI state ID field ("TCI state ID_{i,2}"), a third TCI state ID field ("TCI state ID_{i,3}"), a second TCI state ID field ("TCI state ID_{i,4}").

The field (Cᵢ) need not be included in the specific MAC CE above. In this case, the first octet of each TCI codepoint may always be present.

For the TCI state ID field ("TCI state ID_{i,j}"), respective values of j may correspond to the first DL TCI state, the first UL TCI state, the second DL, TCI state, and the second UL TCI state.

For example, j = 1 may correspond to the first DL TCI state, j = 2 may correspond to the first UL TCI state, j = 3 may correspond to the second DL TCI state, and j = 4 may correspond to the second UL TCI state.

Alternatively, for example, j = 1 may correspond to the second UL TCI state, j = 2 may correspond to the first DL TCI state, j = 3 may correspond to the second UL TCI state, and j = 4 may correspond to the second DL TCI state.

Alternatively, for example, j = 1 may correspond to the first DL TCI state, j = 2 may correspond to the second DL TCI state, j = 3 may correspond to the first UL TCI state, and j = 4 may correspond to the second UL TCI state.

Alternatively, for example, j = 1 may correspond to the first UL TCI state, j = 2 may correspond to the second UL TCI state, j = 3 may correspond to the first DL TCI state, and j = 4 may correspond to the second DL TCI state.

The order (ordering) of the first DL TCI state, the first UL TCI state, the second DL TCI state, and the second UL TCI state corresponding to respective j = 1 to 4 may be fixed.

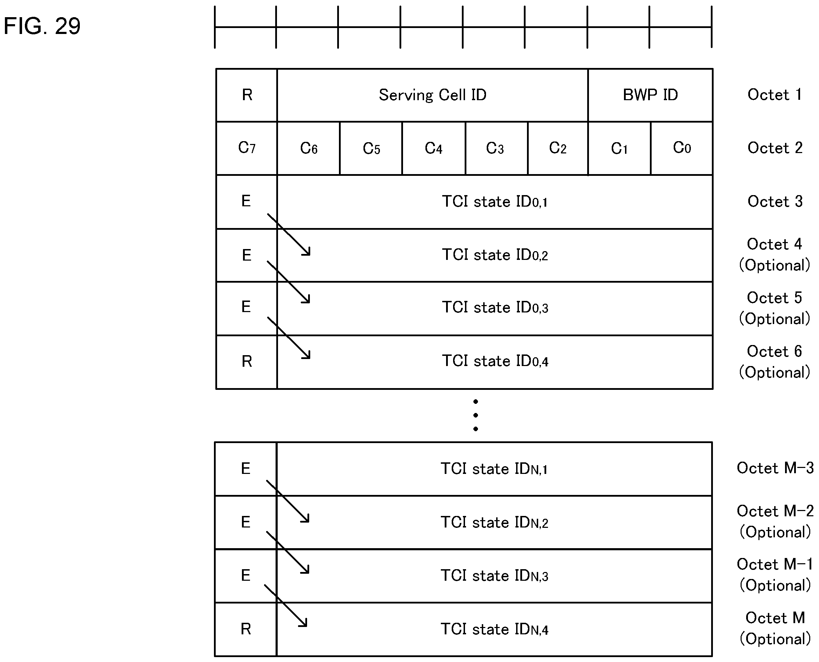

FIG. 29 is a diagram to show an example of a configuration of a MAC CE according to option 2-4/2-5.

In FIG. 29, when Cᵢ indicates a first value (for example, "0"), a UE determines that no (first octet of) corresponding TCI state ID field is included in the MAC CE.

In FIG. 29, when Cᵢ indicates a second value (for example, "1"), the UE determines that a (first octet of) corresponding TCI state ID field is included in the MAC CE.

In FIG. 29, the MAC CE includes fields (E) each indicating whether or not the next octet is present.

According to option 2-4 above, for example, even when one of a first (or second) DL TCI state and a first (or second) UL TCI state corresponding to a certain TCI codepoint is to be activated, only one octet is used (without using two octets), which can reduce overhead.

### {{Option 2-5}}

The specific MAC CE above may include a field(s) (E) each indicating whether or not the next octet is present.

The specific MAC CE may include one or more fields each indicating the order (ordering) of TCI states for corresponding TCI state ID fields.

The field(s) (which may be described as Cᵢ below) may have a specific number of bits (for example, 1 bits).

The field (Cᵢ) may correspond to a TCI state ID field(s) ("TCI state ID_{i,j}"). The TCI state ID field(s) ("TCI state ID_{i,j}") may include a first TCI state ID field ("TCI state ID_{i,1}"), a second TCI state ID field ("TCI state ID_{i,2}"), a third TCI state ID field ("TCI state ID_{i,3}"), a second TCI state ID field ("TCI state ID_{i,4}").

The first octet of each TCI codepoint may always be present. The field (Cᵢ) need not be included in the specific MAC CE above. In this case, the correspondence relationship between the TCI state ID fields and the TCI states may be the same as that of a case where the Cᵢ field indicates the first value (for example, 0 (or 1)) .

For the TCI state ID field ("TCI state ID_{i,j}"), respective values of j may correspond to the first DL TCI state, the first UL TCI state, the second DL, TCI state, and the second UL TCI state.

For example, when the Cᵢ field indicates the first value (for example, 0 (or 1)), the UE may determine for the order of the corresponding TCI state ID fields that j = 1 corresponds to the first DL TCI state, j = 2 corresponds to the first UL TCI state, j = 3 corresponds to the second DL TCI state, and j = 4 corresponds to the second UL TCI state. In other words, when the Cᵢ field indicates the first value (for example, 0 (or 1)), the UE may determine that the TCI state ID fields and TCI states correspond first in the order of DL and UL and then in the order of first and second TCI states.

For example, when the Cᵢ field indicates the second value (for example, 1 (or 0)), the UE may determine for the order of the corresponding TCI state ID fields that j = 1 corresponds to the first UL TCI state, j = 2 corresponds to the first DL TCI state, j = 3 corresponds to the second UL TCI state, and j = 4 corresponds to the second DL TCI state. In other words, when the Cᵢ field indicates the second value (for example, 1 (or 0)), the UE may determine that the TCI state ID fields and TCI states correspond first in the order of UL and DL and then in the order of first and second TCI states.

Alternatively, for example, when the Cᵢ field indicates the first value (for example, 0 (or 1)), the UE may determine for the order of the corresponding TCI state ID fields that j = 1 corresponds to the first DL TCI state, j = 2 corresponds to the second DL TCI state, j = 3 corresponds to the first UL TCI state, and j = 4 corresponds to the second UL TCI state. In other words, when the Cᵢ field indicates the first value (for example, 0 (or 1)), the UE may determine that the TCI state ID fields and TCI states correspond first in the order of first and second TCI states and then in the order of DL and UL.

For example, when the Cᵢ field indicates the second value (for example, 1 (or 0)), the UE may determine for the order of the corresponding TCI state ID fields that j = 1 corresponds to the first UL TCI state, j = 2 corresponds to the second UL TCI state, j = 3 corresponds to the first DL TCI state, and j = 4 corresponds to the second DL TCI state. In other words, when the Cᵢ field indicates the second value (for example, 1 (or 0)), the UE may determine that the TCI state ID fields and TCI states correspond first in the order of first and second TCI states and then in the order of UL and DL.

By using FIG. 29 above, a configuration of a MAC CE according to option 2-5 will be described.

In FIG. 29, a UE determines to which TCI state (first DL/UL TCI state, second DL/UL TCI state) each TCI state ID field corresponding to the Cᵢ field corresponds, based on the Cᵢ value.

In FIG. 29, the MAC CE includes fields (E) each indicating whether or not the next octet is present.

### {{Option 2-6}}

Option 2-6 is a variation of option 2-5.

The specific MAC CE above may include fields (E) each indicating whether or not the next octet is present.

The specific MAC CE may include one field indicating the order (ordering) of TCI states for TCI state ID fields.

The field (which may be described as C below) may have a specific number of bits (for example, 1 bits).

The first octet of each TCI codepoint may always be present. The DCI field (C) need not be included in the specific MAC CE above. In this case, the correspondence relationship between the TCI state ID fields and the TCI states may be the same as that of a case where the C field indicates the first value (for example, 0 (or 1)).

For the TCI state ID field ("TCI state ID_{i,j}"), respective values of j may correspond to the first DL TCI state, the first UL TCI state, the second DL, TCI state, and the second UL TCI state.

For example, when the C field indicates a first value (for example, 0 (or 1)), the UE may determine for the order of the TCI state ID fields included in the MAC CE that j = 1 corresponds to the first DL TCI state, j = 2 corresponds to the first UL TCI state, j = 3 corresponds to the second DL TCI state, and j = 4 corresponds to the second UL TCI state. In other words, when the C field indicates the first value (for example, 0 (or 1)), the UE may determine that the TCI state ID fields and TCI states correspond first in the order of DL and UL and then in the order of first and second TCI states.

For example, when the C field indicates a second value (for example, 1 (or 0)), the UE may determine for the order of the TCI state ID fields included in the MAC CE that j = 1 corresponds to the first UL TCI state, j = 2 corresponds to the first DL TCI state, j = 3 corresponds to the second UL TCI state, and j = 4 corresponds to the second DL TCI state. In other words, when the Cᵢ field indicates the second value (for example, 1 (or 0)), the UE may determine that the TCI state ID fields and TCI states correspond first in the order of UL and DL and then in the order of first and second TCI states.

Alternatively, for example, when the C field indicates the first value (for example, 0 (or 1)), the UE may determine for the order of the TCI state ID fields included in the MAC CE that j = 1 corresponds to the first DL TCI state, j = 2 corresponds to the second DL TCI state, j = 3 corresponds to the first UL TCI state, and j = 4 corresponds to the second UL TCI state. In other words, when the Cᵢ field indicates the first value (for example, 0 (or 1)), the UE may determine that the TCI state ID fields and TCI states correspond first in the order of first and second TCI states and then in the order of DL and UL.

For example, when the C field indicates the second value (for example, 1 (or 0)), the UE may determine for the order of the TCI state ID fields included in the MAC CE that j = 1 corresponds to the first UL TCI state, j = 2 corresponds to the second UL TCI state, j = 3 corresponds to the first DL TCI state, and j = 4 corresponds to the second DL TCI state. In other words, when the Cᵢ field indicates the second value (for example, 1 (or 0)), the UE may determine that the TCI state ID fields and TCI states correspond first in the order of first and second TCI states and then in the order of UL and DL.

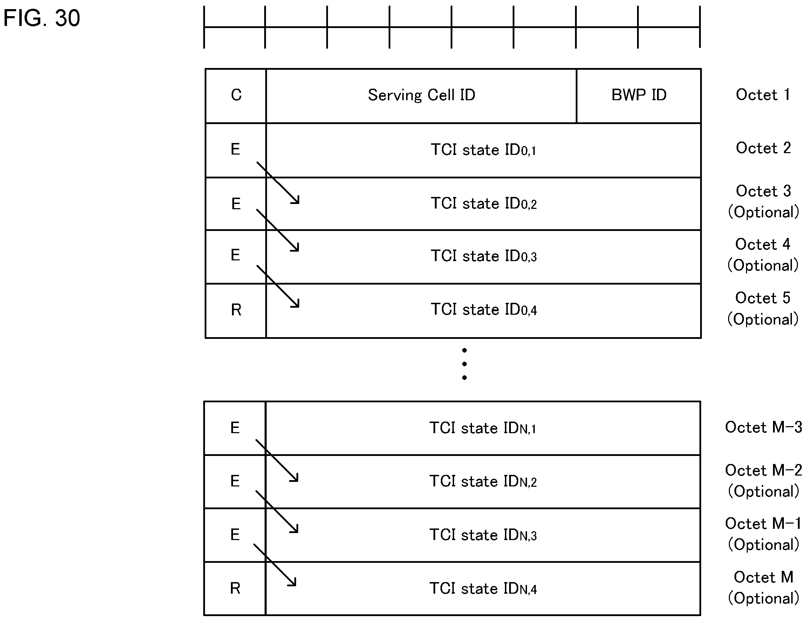

FIG. 30 is a diagram to show an example of a configuration of a MAC CE according to option 2-6.

In FIG. 30, a UE determines to which TCI state (first DL/UL TCI state, second DL/UL TCI state) each TCI state ID field included in the MAC CE corresponds, based on a value of C.

In FIG. 30, the MAC CE includes fields (E) each indicating whether or not the next octet is present.

According to options 2-5 and 2-6 above, the order of TCI states corresponding to TCI state ID fields can be changed, which can prevent a UE from being notified again of TCI states with no need of notification of activation and thereby reduce overhead.

### {{Option 2-7}}

The specific MAC CE above may include fields (E) each indicating whether or not the next octet is present.

The specific MAC CE may include one or more fields each indicating whether a corresponding TCI state ID field(s) corresponds to a joint TCI state(s) or a separate TCI state(s).

The field(s) (which may be described as Cᵢ below) may have a specific number of bits (for example, 1 bits).

The field (Cᵢ) may correspond to a TCI state ID field(s) ("TCI state ID_{i,j}"). The TCI state ID field(s) ("TCI state ID_{i,j}") may include at least one of a first TCI state ID field ("TCI state ID_{i,1}"), a second TCI state ID field ("TCI state ID_{i,2}"), a third TCI state ID field ("TCI state ID_{i,3}"), and a second TCI state ID field ("TCI state ID_{i,4}").

The first octet of each TCI codepoint may always be present. The field (Cᵢ) need not be included in the specific MAC CE above. In this case, whether the TCI state ID field(s) corresponds to a joint TCI state(s) or a separate TCI state(s) may be the same as that of a case where the Cᵢ field indicates a first value (for example, 0 (or 1)).

For the TCI state ID field ("TCI state ID_{i,j}"), respective values of j may correspond to the first DL/UL TCI state and the second DL/UL TCI state.

For example, when the Cᵢ field indicates a first value (for example, 0 (or 1)), a UE may determine that the TCI state of an (i + 1)-th codepoint in a TCI list related to joint TCI states is activated for the first TCI state and the second TCI state among the TCI state ID fields corresponding to the Cᵢ field.

For example, when the Cᵢ field indicates a second value (for example, 1 (or 0)), the UE may determine that the TCI state of the (i + 1)-th codepoint in a TCI list related to separate TCI states is activated for the first TCI state and the second TCI state among the TCI state ID fields corresponding to the Cᵢ field.

For the UE, the TCI state list related to joint TCI states and the TCI state list related to separate TCI states may be configured separately.

In this case, if the Cᵢ field indicates joint TCI states, the UE may determine that the TCI state IDs corresponding to the Cᵢ field correspond to the TCI state list related to joint TCI states.

In this case, if the Cᵢ field indicates separate TCI states, the UE may determine that the TCI state IDs corresponding to the Cᵢ field correspond to the TCI state list related to separate TCI states.

For the UE, a TCI state list related to joint TCI states and a TCI state list related to separate TCI states may be configured in common.

In this case, the UE may determine that the TCI state IDs corresponding to the Cᵢ field correspond to a common TCI state list, irrespective of whether the Cᵢ field indicates joint/separate TCI states.

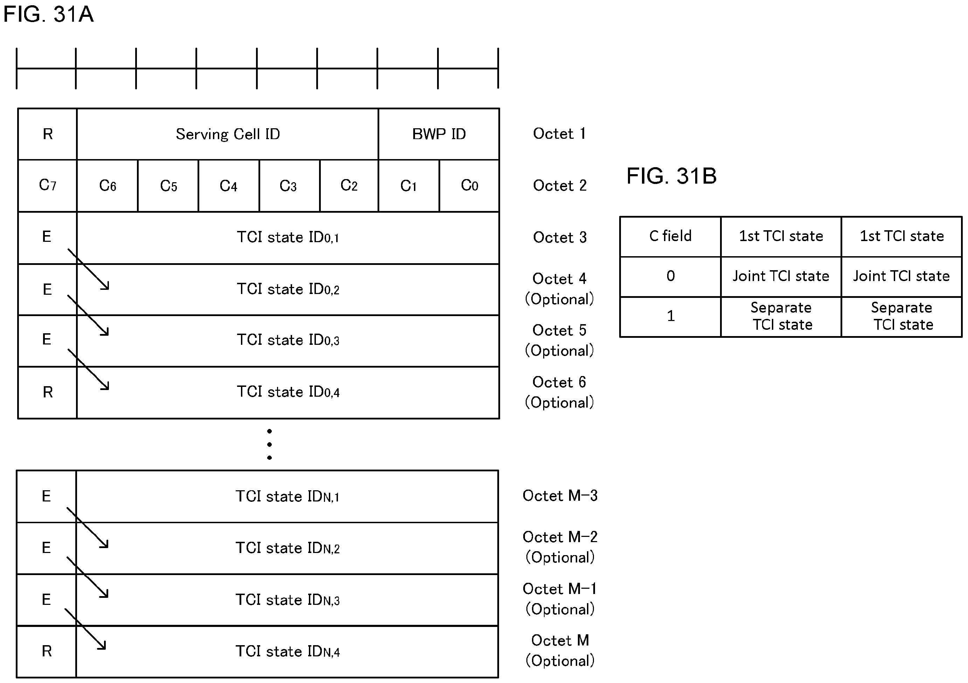

FIG. 31A and FIG. 31B are diagrams to show an example of a configuration of a MAC CE according to option 2-7.

In FIG. 31A, a UE determines, based on a value of the Cᵢ field, whether each TCI state ID field corresponding to the Cᵢ field indicates a TCI state of a joint TCI state or a separate TCI state.

In the example shown in Fig. 31B, when the value of the Cᵢ field is 0, this indicates that a first TCI state and a second TCI state to be activated are joint TCI states. In the example shown in Fig. 31B, when the value of the Cᵢ field is 1, this indicates that a first TCI state and a second TCI state to be activated are separate TCI states.

Note that the correspondence between a value of the Cᵢ field and joint/separate TCI states is merely an example, and this is not restrictive. For example, when the value of the Cᵢ field is 0 (or 1), this may indicate that a first TCI state to be activated is a joint (or separate) TCI state while a second TCI state to be activated is a joint (or separate) TCI state. For example, when the value of the Cᵢ field is 1 (or 0), this may indicate that the first TCI state to be activated is a joint (or separate) TCI state while the second TCI state to be activated is a separate (or joint) TCI state.

In FIG. 31A, the MAC CE includes fields (E) each indicating whether or not the next octet is present.

Note that, although an example of the Cᵢ fields of 1 bit are configured over 1 octet has been described in option 2-7 (FIG. 31A and Fig. 31B) above, the configuration of the Cᵢ fields is not limited to this. For example, the Cᵢ fields may each have two or more bits and may be configured over multiple octets. When the Cᵢ fields each have multiple bits, a bit for indicating the order of TCI states corresponding to TCI state IDs described in options 2-4 and 2-5 above may be included.

### {{Option 2-8}}

Option 2-8 is a variation of option 2-7 above. Hence, in this option, differences from option 2-7 above will be described.

The Cᵢ fields included in the specific MAC CE above may each have a specific number of bits (for example, two bits). For example, a first bit of the Cᵢ field may indicate whether a corresponding first TCI state is a joint TCI state or a separate TCI state, and a second bit of the Cᵢ field may indicate whether a corresponding second TCI state is a joint TCI state or a separate TCI state.

For example, when the Cᵢ field indicates a first value (for example, 00 (or 01/10/11)), a UE may determine that the TCI state of an (i + 1)-th codepoint in a TCI list related to joint TCI states is activated for the first TCI state and the second TCI state among the TCI state ID fields corresponding to the Cᵢ field.

For example, when the Cᵢ field indicates a second value (for example, 01 (or 00/10/11)), the UE may determine that the TCI state of the (i + 1)-th codepoint in the TCI list related to joint TCI states is activated for the first TCI state, and the TCI state of the (i + 1)-th codepoint in a TCI list related to separate TCI states is activated for the second TCI state, among the TCI state ID fields corresponding to the Cᵢ field.

For example, when the Cᵢ field indicates a third value (for example, 10 (or 00/01/11)), the UE may determine that the TCI state of the (i + 1)-th codepoint in the TCI list related to separate TCI states is activated for the first TCI state, and the TCI state of the (i + 1)-th codepoint in the TCI list related to joint TCI states is activated for the second TCI state, among the TCI state ID fields corresponding to the Cᵢ field.

For example, when the Cᵢ field indicates a fourth value (for example, 11 (or 00/01/10)), the UE may determine that the TCI state of the (i + 1)-th codepoint in a TCI list related to separate TCI states is activated for the first TCI state and the second TCI state among the TCI state ID fields corresponding to the Cᵢ field.

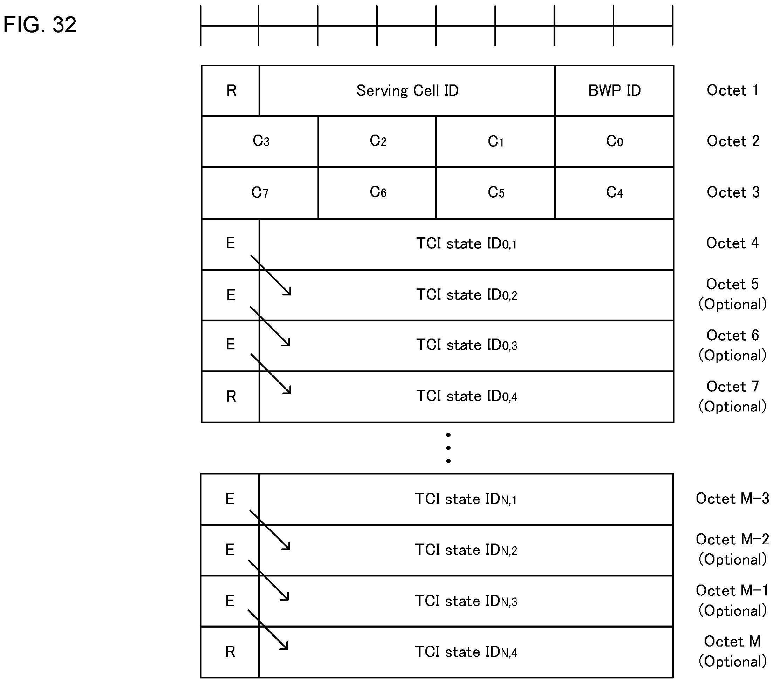

FIG. 32 is a diagram to show an example of a configuration of a MAC CE according to option 2-8.

In FIG. 32, a UE determines, based on a value of the Cᵢ field, whether each TCI state ID field corresponding to the Cᵢ field indicates a TCI state of a joint TCI state or a separate TCI state.

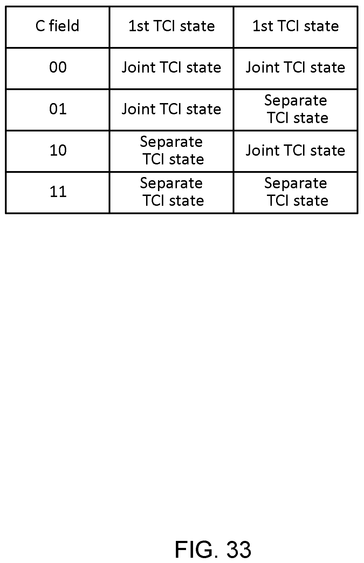

FIG. 33 is a diagram to show another example of the configuration of the MAC CE according to option 2-8. In the example shown in Fig. 33, when the value of the Cᵢ field is 00, this indicates that a first TCI state and a second TCI state to be activated are joint TCI states. In the example shown in FIG. 33, when the value of the Cᵢ field is 01, this indicates that the first TCI state to be activated is a joint TCI state while the second TCI state to be activated is a separate TCI state. In the example shown in FIG. 33, when the value of the Cᵢ field is 01, this indicates that the first TCI state to be activated is a separate TCI state while the second TCI state to be activated is a joint TCI state. In the example shown in Fig. 33, when the value of the Cᵢ field is 11, this indicates that the first TCI state and the second TCI state to be activated are separate TCI states.

Note that the correspondence between a value of the Cᵢ field and joint/separate TCI states is merely an example, and this is not restrictive.

Note that, although an example of the Cᵢ fields of 2 bit are configured over 2 octets has been described in option 2-8 (FIG. 32 and Fig. 33) above, the configuration of the Cᵢ fields is not limited to this. For example, the Cᵢ fields may each have three or more bits and may be configured over multiple octets. When the Cᵢ fields each have three of more bits, a bit for indicating the order of TCI states corresponding to TCI state IDs described in options 2-4 and 2-5 above may be included.

According to options 2-7 and 2-8 above, activation of both a joint TCI state field(s) and a separate TCI state field(s) can be performed by one MAC CE. In addition, by notifying activation of a joint TCI state(s) as well as a separate TCI state(s), TCI state ID fields can be reduced.

According to the third embodiment above, TCI state lists and a MAC CE that activates a TCI state(s) can be appropriately defined.

### <Variations>

Each embodiment/option/choice of the present disclosure may be supported in intra-cell/inter-cell beam indication.

In each embodiment/option/choice of the present disclosure, a TRP-specific (additional) Transmitted Precoding Matrix Indicator (TPMI) field/SRI field for PUSCH using Rel-17 multi-TRP may be used.

### <Supplements>

At least one of the embodiments above may be applied only to a UE that has reported a specific UE capability or that supports the specific UE capability.

The specific UE capability may indicate at least one of the following:
- supporting of specific processing/operation/control/information about at least one of the embodiments above
- supporting of either of a TRP-specific TCI state list and a TRP-common TCI state list
- supporting of a joint TCI state/separate TCI state
- supporting of a common TCI state

The specific UE capability may be a capability applied over all the frequencies (in common irrespective of frequency), a capability for each frequency (for example, cell, band, BWP), a capability for each frequency range (for example, Frequency Range 1 (FR1), FR2, FR3, FR4, FR5, FR2-1, and FR2-2), or a capability for each subcarrier spacing (SCS).

The specific UE capability may be a capability applied for all duplex schemes (in common irrespective of duplex scheme) or a capability for each duplex scheme (for example, time division duplex (TDD), frequency division duplex (FDD)).

At least one of the embodiments above may be applied to a case where the UE is configured with specific information related to the embodiment above by higher layer signaling. For example, the specific information may be information indicating enabling of a common TCI state, any RRC parameter for a specific release (for example, Rel. 18), or the like.

When the UE does not support at least one of the specific UE capabilities above or is not configured with the specific information, operation of Rel. 15/16 may be applied, for example.

### (Supplementary Notes A)

Regarding one embodiment of the present disclosure, the following supplementary notes of the invention will be given.

### {Supplementary Note 1}

A terminal including: a receiving section that receives multiple downlink control information (DCI) for indicating multiple transmission configuration indication (TCI) states; and a control section that determines, based on an index related to a transmission/reception point associated with a control resource set scheduling or triggering a signal to which a TCI state is to be applied, which TCI state among the multiple TCI states to apply to the signal, wherein each of the multiple TCI states is a TCI state to be applied to both a downlink (DL) signal and an uplink (UL) signal, or a TCI state to be applied to a DL signal and a TCI state to be applied to a UL signal.

### {Supplementary Note 2}

The terminal according to supplementary note 1, wherein, even when a higher layer parameter indicating following the multiple TCI states is not associated with the control resource set, the control section applies any one TCI state of the multiple TCI states to the signal.

### {Supplementary Note 3}

The terminal according to supplementary note 1 or 2, wherein, when a higher layer parameter indicating following the multiple TCI states is not associated with the control resource set, the control section applies a TCI state associated with the control resource set to the signal.

### {Supplementary Note 4}

The terminal according to any one of supplementary notes 1 to 3, wherein the multiple TCI states are activated from a TCI state list common to multiple transmission/reception points.

### (Supplementary Notes B)

Regarding one embodiment of the present disclosure, the following supplementary notes of the invention will be given.

### {Supplementary Note 1}

A terminal including: a receiving section that receives one downlink control information (DCI) for indicating multiple transmission configuration indication (TCI) states; and a control section that determines, based on at least one of an index related to a transmission/reception point associated with a control resource set scheduling or triggering a signal to which a TCI state is to be applied and an index related to the signal, which TCI state among the multiple TCI states to apply to the signal, wherein each of the multiple TCI states is a TCI state to be applied to both a downlink (DL) signal and an uplink (UL) signal, or a TCI state to be applied to a DL signal and a TCI state to be applied to a UL signal.

### {Supplementary Note 2}

The terminal according to supplementary note 1, wherein the receiving section further receives indication information indicating at least one of whether the signal is for a single transmission/reception point or for multiple transmission/reception points and an order of application of the multiple TCI states, and the control section further determines, based on the indication information, which TCI state among the multiple TCI states to apply to the signal.

### {Supplementary Note 3}

The terminal according to supplementary note 1 or 2, wherein the control section determines, based on a correspondence relationship between the index related to the transmission/reception point and an order of application of the multiple TCI states, which TCI state among the multiple TCI states to apply to the signal.

### {Supplementary Note 4}

The terminal according to any one of supplementary notes 1 to 3, wherein the multiple TCI states are activated from a transmission/reception-point-specific TCI state list.

### (Radio Communication System)

Hereinafter, a structure of a radio communication system according to one embodiment of the present disclosure will be described. In this radio communication system, communication is performed by using any one or a combination of the radio communication methods according to the embodiments of the present disclosure.

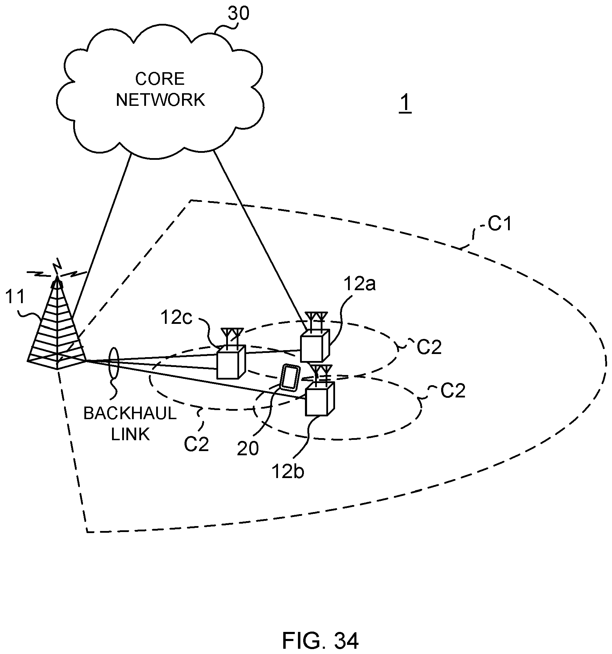

FIG. 34 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are transmitted on the PDSCH. User data, higher layer control information and so on may be transmitted on the PUSCH. The Master Information Blocks (MIBs) may be transmitted on the PBCH.

Lower layer control information may be transmitted on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data," and the PUSCH may be interpreted as "UL data."

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be used interchangeably.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be transmitted by means of the PUCCH. By means of the PRACH, random access preambles for establishing connections with cells may be transmitted.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be transmitted. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be transmitted as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), and so on may be transmitted as an uplink reference signal (UL-RS). Note that DMRS may be referred to as a "user terminal specific reference signal (UE-specific Reference Signal) ."

### (Base Station)

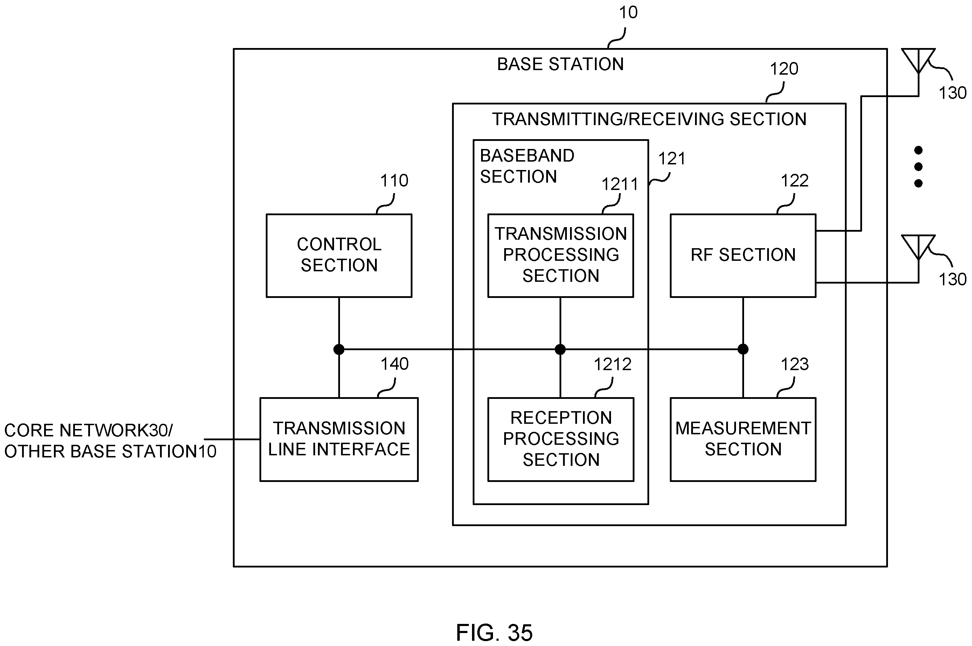

FIG. 35 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit multiple downlink control information (multi-DCI) for indicating multiple transmission configuration indication (TCI) states. The control section 110 may indicate, by using an index related to a transmission/reception point associated with a control resource set scheduling or triggering a signal to which a TCI state is to be applied, which TCI state among the multiple TCI states to apply to the signal. Each of the multiple TCI states may be a TCI state to be applied to both a downlink (DL) signal and an uplink (UL) signal (joint TCI state), or a TCI state to be applied to a DL signal (separate DL TCI state) and a TCI state to be applied to a UL signal (separate UL TCI state) (first/second embodiment).

The transmitting/receiving section 120 may transmit one downlink control information (single DCI) for indicating multiple transmission configuration indication (TCI) states. The control section 110 may indicate, by using at least one of an index related to a transmission/reception point associated with a control resource set scheduling or triggering a signal to which a TCI state is to be applied and an index related to the signal, which TCI state among the multiple TCI states to apply to the signal. Each of the multiple TCI states may be a TCI state to be applied to both a downlink (DL) signal and an uplink (UL) signal (joint TCI state), or a TCI state to be applied to a DL signal (separate DL TCI state) and a TCI state to be applied to a UL signal (separate UL TCI state) (first/second embodiment).

### (User Terminal)

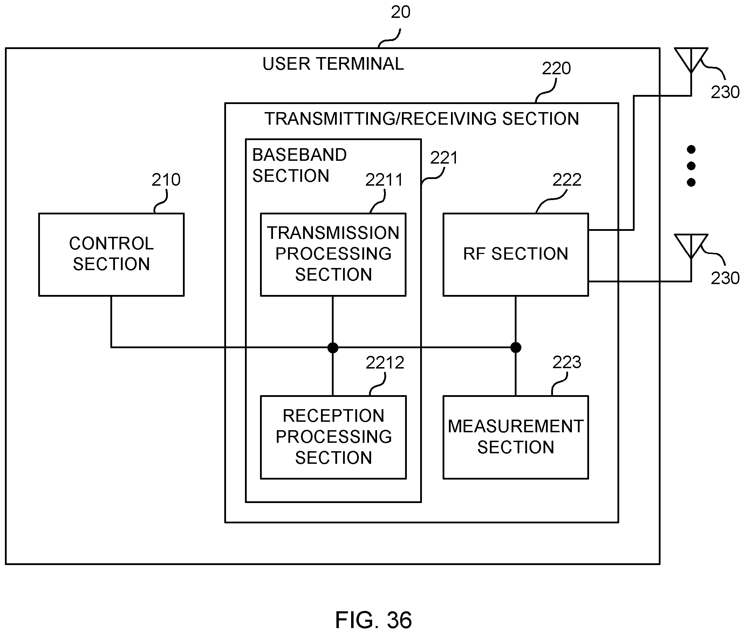

FIG. 36 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive multiple downlink control information (multi-DCI) for indicating multiple transmission configuration indication (TCI) states. The control section 210 may determine, based on an index related to a transmission/reception point associated with a control resource set scheduling or triggering a signal to which a TCI state is to be applied, which TCI state among the multiple TCI states to apply to the signal. Each of the multiple TCI states may be a TCI state to be applied to both a downlink (DL) signal and an uplink (UL) signal (joint TCI state), or a TCI state to be applied to a DL signal (separate DL TCI state) and a TCI state to be applied to a UL signal (separate UL TCI state) (first/second embodiment).

Even when a higher layer parameter indicating following the multiple TCI states is not associated with the control resource set, the control section 210 may apply any one TCI state of the multiple TCI states to the signal (second embodiment).

When a higher layer parameter indicating following the multiple TCI states is not associated with the control resource set, the control section 210 may apply a TCI state associated with the control resource set to the signal (second embodiment).

The multiple TCI states may be activated from a TCI state list common to multiple transmission/reception points (third embodiment).

The transmitting/receiving section 220 may receive one downlink control information for indicating multiple transmission configuration indication (TCI) states. The control section 210 may determine, based on at least one of an index related to a transmission/reception point associated with a control resource set scheduling or triggering a signal to which a TCI state is to be applied and an index related to the signal, which TCI state among the multiple TCI states to apply to the signal. Each of the multiple TCI states may be a TCI state to be applied to both a downlink (DL) signal and an uplink (UL) signal (joint TCI state), or a TCI state to be applied to a DL signal (separate DL TCI state) and a TCI state to be applied to a UL signal (separate UL TCI state) (first/second embodiment).

The transmitting/receiving section 220 may further receive indication information (DCI field) indicating at least one of whether the signal is for a single transmission/reception point or for multiple transmission/reception points and an order of application of the multiple TCI states. The control section 210 may further determine, based on the indication information, which TCI state of the multiple TCI states to apply to the signal (second embodiment).

The control section 210 may determine, based on a correspondence relationship between the index related to the transmission/reception point and an order of application of the multiple TCI states, which TCI state among the multiple TCI states to apply to the signal (second embodiment).

The multiple TCI states may be activated from a transmission/reception-point-specific TCI state list (third embodiment).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include determination, judgment, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

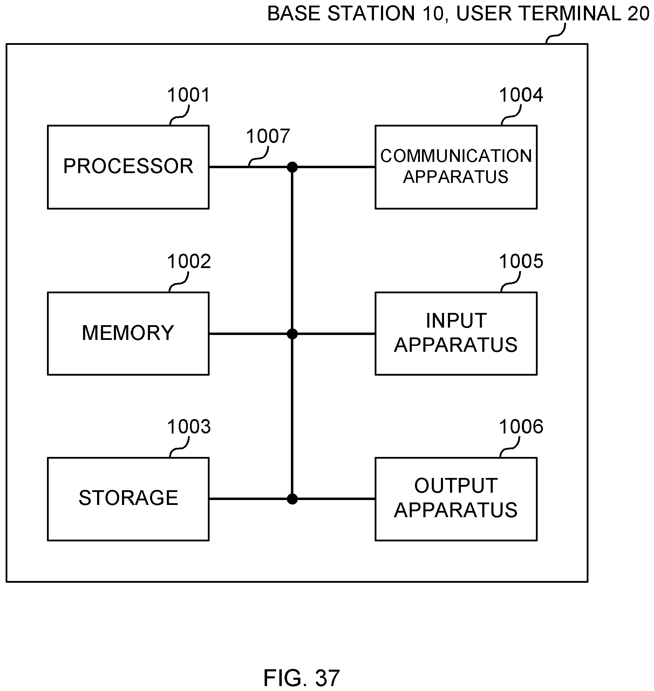

For example, a base station, a user terminal, and so on according to one embodiment of the present disclosure may function as a computer that executes the processes of the radio communication method of the present disclosure. FIG. 37 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be used interchangeably. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be used interchangeably.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be indicated by given indices.

The names used for parameters and so on in the present disclosure are in no respect limiting. Furthermore, mathematical expressions that use these parameters, and so on may be different from those expressly disclosed in the present disclosure. Since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information blocks (SIBs), and so on), Medium Access Control (MAC) signaling), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be notified using, for example, MAC control elements (MAC CEs) .

Also, notification of given information (for example, notification of "X holds") does not necessarily have to be notified explicitly, and can be notified implicitly (by, for example, not notifying this given information or notifying another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, a base station transmitting information to a terminal and the base station indicating control/operation based on the information to the terminal may be used interchangeably.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on.

The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, an artificial satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an autonomous car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

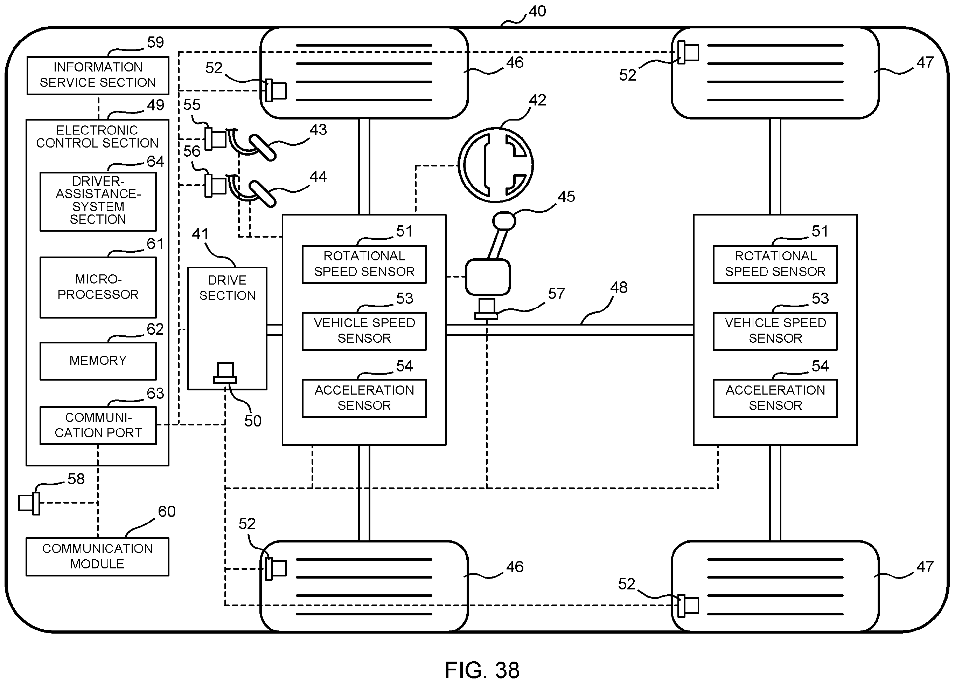

FIG. 38 is a diagram to show an example of a vehicle according to one embodiment. A vehicle 40 includes a drive section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The drive section 41 includes, for example, at least one of an engine, a motor, and a hybrid of an engine and a motor. The steering section 42 at least includes a steering wheel, and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 included in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes various devices for providing (outputting) various pieces of information such as drive information, traffic information, and entertainment information, such as a car navigation system, an audio system, a speaker, a display, a television, and a radio, and one or more ECUs that control these devices. The information service section 59 provides various pieces of information/services (for example, multimedia information/multimedia service) for an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driver-assistance-system section 64 includes various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor, and one or more ECUs that control these devices. The driver-assistance-system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, via the communication port 63, the communication module 60 transmits and receives data (information) to and from the drive section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 can be controlled by the microprocessor 61 of the electronic control section 49, and is a communication device that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals from the various sensors 50 to 58 described above input to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, inter-vehicle distance information, and the like) transmitted from the external apparatus, and displays the various pieces of information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may perform control of the drive section 41, the steering section 42, the accelerator pedal 43, the brake pedal 44, the shift lever 45, the right and left front wheels 46, the right and left rear wheels 47, the axle 48, the various sensors 50 to 58, and the like included in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "judging (determining)" as in the present disclosure herein may encompass a wide variety of actions. For example, "judging (determining)" may be interpreted to mean making "determinations" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

"The maximum transmit power" according to the present disclosure may mean a maximum value of the transmit power, may mean the nominal maximum transmit power (the nominal UE maximum transmit power), or may mean the rated maximum transmit power (the rated UE maximum transmit power).

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

In the present disclosure, "equal to or smaller than," "smaller than," "equal to or larger than," "larger than," "equal to," and the like may be used interchangeably. In the present disclosure, words such as "good," "poor," "large," "small," "high," "low," "early," "late," "wide," "narrow," and the like may be used interchangeably irrespective of positive degree, comparative degree, and superlative degree. In the present disclosure, expressions obtained by adding "i-th" (i is any integer) to words such as "good," "poor," "large," "small," "high," "low," "early," "late," "wide," "narrow," and the like may be used interchangeably irrespective of positive degree, comparative degree, and superlative degree (for example, "highest" may be interpreted as "i-th highest," and vice versa).

In the present disclosure, "of," "for," "regarding," "related to," "associated with," and the like may be used interchangeably.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

## Claims

1. A terminal comprising:
a receiving section that receives multiple downlink control information (DCI) for indicating multiple transmission configuration indication (TCI) states; and
a control section that determines, based on an index related to a transmission/reception point associated with a control resource set scheduling or triggering a signal to which a TCI state is to be applied, which TCI state among the multiple TCI states to apply to the signal, wherein
each of the multiple TCI states is a TCI state to be applied to both a downlink (DL) signal and an uplink (UL) signal, or a TCI state to be applied to a DL signal and a TCI state to be applied to a UL signal.

2. The terminal according to claim 1, wherein
even when a higher layer parameter indicating following the multiple TCI states is not associated with the control resource set, the control section applies any one TCI state of the multiple TCI states to the signal.

3. The terminal according to claim 1, wherein
when a higher layer parameter indicating following the multiple TCI states is not associated with the control resource set, the control section applies a TCI state associated with the control resource set to the signal.

4. The terminal according to claim 1, wherein
the multiple TCI states are activated from a TCI state list common to multiple transmission/reception points.

5. A radio communication method for a terminal, the radio communication method comprising:
receiving multiple downlink control information (DCI) for indicating multiple transmission configuration indication (TCI) states; and
determining, based on an index related to a transmission/reception point associated with a control resource set scheduling or triggering a signal to which a TCI state is to be applied, which TCI state among the multiple TCI states to apply to the signal, wherein
each of the multiple TCI states is a TCI state to be applied to both a downlink (DL) signal and an uplink (UL) signal, or a TCI state to be applied to a DL signal and a TCI state to be applied to a UL signal.

6. A base station comprising:
a transmitting section that transmits multiple downlink control information (DCI) for indicating multiple transmission configuration indication (TCI) states; and
a control section that indicates, by using an index related to a transmission/reception point associated with a control resource set scheduling or triggering a signal to which a TCI state is to be applied, which TCI state among the multiple TCI states to apply to the signal, wherein
each of the multiple TCI states is a TCI state to be applied to both a downlink (DL) signal and an uplink (UL) signal, or a TCI state to be applied to a DL signal and a TCI state to be applied to a UL signal.
